# EUROPEAN PATENT APPLICATION

(11) **EP 4 618 474 A1**
(43) Date of publication of application: **17.09.2025**
(21) Application number: 23914317.5
(22) Date of filing: 25.09.2023
(51) Int. Cl.: H04L 9/32

(54) **CROSS-BLOCKCHAIN TRANSACTION PROCESSING METHOD, RELATED DEVICE, STORAGE MEDIUM AND PRODUCT**

(30) Priority: 06.01.2023 CN 202310019954
(71) Applicant: Tencent Technology (Shenzhen) Company Limited, Shenzhen, Guangdong 518057 (CN)
(72) Inventor: HUANG, Yangjun, Shenzhen, Guangdong 518057 (CN); NIE, Kaixuan, Shenzhen, Guangdong 518057 (CN); ZHU, Gengliang, Shenzhen, Guangdong 518057 (CN); LIU, Hanqing, Shenzhen, Guangdong 518057 (CN); SHI, Yifang, Shenzhen, Guangdong 518057 (CN); LIU, Qucheng, Shenzhen, Guangdong 518057 (CN); LIAO, Zhiyong, Shenzhen, Guangdong 518057 (CN); WANG, Zongyou, Shenzhen, Guangdong 518057 (CN)
(74) Representative: EP&C
(86) International application number: PCT/CN2023/121057
(87) International publication number: WO 2024/146179

(57) **Abstract**

Provided in the present application are a cross-blockchain transaction processing method, a related device, a storage medium and a product. The cross-blockchain transaction processing method comprises: acquiring from a source blockchain network a cross-blockchain transaction processing request by means of a first interface node, and distributing the cross-blockchain transaction processing request to a first number of repeaters; by means of the repeaters, performing first verification on the cross-blockchain transaction processing request and signing same to generate sub-signatures; by means of a signature aggregation node, after a second number of sub-signatures are received, generating a first signature of a relay system, and sending the cross-blockchain transaction processing request and the first signature to a target blockchain network, such that the target blockchain network performs second verification on the first signature and processes the cross-blockchain transaction processing request, wherein the second number is smaller than the first number. The embodiments of the present application can be applied to various scenarios such as blockchains, virtual digital assets, and security technology. The embodiments of the present application can reduce resource consumption while cross-blockchain security is achieved.

## Description

### RELATED APPLICATION

This application claims priority to Chinese Patent Application No. 2023100199546, entitled "METHOD FOR PROCESSING CROSS-BLOCKCHAIN TRANSACTIONS, RELATED DEVICE, STORAGE MEDIUM, AND PRODUCT" filed to the China National Intellectual Property Administration on January 6, 2023.

### FIELD OF THE TECHNOLOGY

This application relates to the field of blockchain technologies, and in particular, to a cross-blockchain transaction processing technology.

### BACKGROUND OF THE DISCLOSURE

In the existing blockchain technology, each blockchain network maintains one blockchain. There are multiple service nodes in each blockchain network. After the multiple service nodes reach consensus on a block generated by one of the service nodes, the block is recorded onto the blockchain of the blockchain network. Different blockchain networks maintain different blockchains. When a blockchain network requires information on a blockchain maintained by another blockchain network, or requests another blockchain network to perform a certain operation, a cross-blockchain transaction will occur.

In the related art, the cross-blockchain transaction described above is executed by a relay blockchain. The relay blockchain is maintained by a relay node and is trustworthy. When a blockchain network needs to execute a cross-blockchain transaction, it transmits a cross-blockchain transaction request to the relay node. After the relay node verifies the cross-blockchain transaction request, a block is generated and recorded to the relay blockchain. Since the relay blockchain is trustworthy, another blockchain network may execute the cross-blockchain transaction request according to the block recorded in the relay blockchain. However, maintaining the relay blockchain and recording the block to the relay blockchain require significant overhead and resource consumption. Therefore, a cross-blockchain transaction processing technology that consumes fewer resources while ensuring security is expected.

### SUMMARY

Embodiments of this application provide a method for processing cross-blockchain transactions, a related device, a storage medium, and a product, which can reduce resource consumption while ensuring the security of cross-blockchain transaction processing.

According to a first aspect, this application provides a method for processing cross-blockchain transactions, applied to a relay system between a source blockchain network and a target blockchain network, the relay system including a first interface node, a first number of relays, and a signature aggregation node, the first number being an integer greater than 1, the method for processing cross-blockchain transactions including:
acquiring a cross-blockchain transaction processing request from the source blockchain network through the first interface node, and distributing the cross-blockchain transaction processing request to the first number of relays;
performing first verification and signature on the cross-blockchain transaction processing request through the relays to generate sub-signatures; and
generating a first signature of the relay system after receiving a second number of sub-signatures through the signature aggregation node, and transmitting the cross-blockchain transaction processing request and the first signature to the target blockchain network, to enable the target blockchain network to perform second verification on the first signature and process the cross-blockchain transaction processing request, the second number being an integer greater than 1 and smaller than or equal to the first number.

According to a second aspect, this application provides a relay system, applied between a source blockchain network and a target blockchain network, the relay system including a first interface node, a first number of relays, and a signature aggregation node, the first number being an integer greater than 1,
the first interface node being configured to acquire a cross-blockchain transaction processing request from the source blockchain network, and distribute the cross-blockchain transaction processing request to the first number of relays;
the relays being configured to perform first verification and signature on the cross-blockchain transaction processing request to generate sub-signatures; and
the signature aggregation node being configured to generate a first signature of the relay system after receiving a second number of sub-signatures, and transmit the cross-blockchain transaction processing request and the first signature to the target blockchain network, to enable the target blockchain network to perform second verification on the first signature and process the cross-blockchain transaction processing request, the second number being an integer greater than 1 and smaller than or equal to the first number.

According to a third aspect, this application provides an electronic device, including a memory and a processor, the memory having a computer program stored, the processor executing the computer program to implement the method for processing cross-blockchain transactions described above.

According to a fourth aspect, this application provides a computer-readable storage medium, having a computer program stored, the computer program being executed by a processor to implement the method for processing cross-blockchain transactions described above.

According to a fifth aspect, this application provides a computer program product, including a computer program, the computer program being read and executed by a processor of a computer device, causing the computer device to implement the method for processing cross-blockchain transactions described above.

In embodiments of this application, considering that the method of recording through a relay blockchain consumes more resources, the relay blockchain is canceled and it is replaced with a method of signing respectively through multiple relays. The relays perform verification on the cross-blockchain transaction processing request and generate sub-signatures. After receiving the second number of sub-signatures, the signature aggregation node generates an official signature of the relay system and transmits the signature to the target blockchain network for verification and processing. The second number is smaller than the total number (the first number) of the relays in the relay system. The official signature of the relay system is generated only when receiving the sub-signatures from the second number of relays. Therefore, when the target blockchain network receives the official signature, enough relays have been successfully verified, and the cross-blockchain transaction processing request is trustworthy, thus ensuring the security of cross-blockchain transaction processing. Moreover, since the resources consumed in signing by the multiple relays are much fewer than those consumed in maintaining a relay blockchain and recording on the relay blockchain, resource consumption is reduced. The second number is smaller than the first number, which means that the signature aggregation node may publish the official signature of the relay system without waiting for all the first number of relays to sign, thus ensuring both the security and processing efficiency.

### BRIEF DESCRIPTION OF THE DRAWINGS

FIG. 1 is an architecture diagram of a system to which a method for processing cross-blockchain transactions is applied according to an embodiment of this application.
FIG. 2a is a schematic diagram of a cross-blockchain virtual resource exchange scenario to which a method for processing cross-blockchain transactions is applied according to an embodiment of this application.
FIG. 2b is a schematic diagram of a cross-blockchain virtual resource exchange scenario to which a method for processing cross-blockchain transactions is applied according to an embodiment of this application.
FIG. 2c is a schematic diagram of a cross-blockchain virtual resource exchange scenario to which a method for processing cross-blockchain transactions is applied according to an embodiment of this application.
FIG. 2d is a schematic diagram of a cross-blockchain virtual resource exchange scenario to which a method for processing cross-blockchain transactions is applied according to an embodiment of this application.
FIG. 2e is a schematic diagram of a cross-blockchain virtual resource exchange scenario to which a method for processing cross-blockchain transactions is applied according to an embodiment of this application.
FIG. 3a is a schematic diagram of a cross-blockchain function calling scenario to which a method for processing cross-blockchain transactions is applied according to an embodiment of this application.
FIG. 3b is a schematic diagram of a cross-blockchain function calling scenario to which a method for processing cross-blockchain transactions is applied according to an embodiment of this application.
FIG. 3c is a schematic diagram of a cross-blockchain function calling scenario to which a method for processing cross-blockchain transactions is applied according to an embodiment of this application.
FIG. 3d is a schematic diagram of a cross-blockchain function calling scenario to which a method for processing cross-blockchain transactions is applied according to an embodiment of this application.
FIG. 4a is a schematic diagram of a multi-blockchain resource aggregation statistics scenario to which a method for processing cross-blockchain transactions is applied according to an embodiment of this application.
FIG. 4b is a schematic diagram of a multi-blockchain resource aggregation statistics scenario to which a method for processing cross-blockchain transactions is applied according to an embodiment of this application.
FIG. 4c is a schematic diagram of a multi-blockchain resource aggregation statistics scenario to which a method for processing cross-blockchain transactions is applied according to an embodiment of this application.
FIG. 4d is a schematic diagram of a multi-blockchain resource aggregation statistics scenario to which a method for processing cross-blockchain transactions is applied according to an embodiment of this application.
FIG. 4e is a schematic diagram of a multi-blockchain resource aggregation statistics scenario to which a method for processing cross-blockchain transactions is applied according to an embodiment of this application.
FIG. 5 is a flowchart of a method for processing cross-blockchain transactions according to an embodiment of this application.
FIG. 6 is a schematic diagram of a comprehensive application scenario to which a method for processing cross-blockchain transactions is applied according to an embodiment of this application.
FIG. 7 is a structural diagram showing performing a method for processing cross-blockchain transactions according to an embodiment of this application.
FIG. 8 is a flowchart of a first half of operation S610 in FIG. 5.
FIG. 9 is a schematic diagram of a data structure of a cross-blockchain transaction processing request block in operation S612 in FIG. 8.
FIG. 10a is a specific flowchart of recording a cross-blockchain transaction processing request block to a source blockchain in operation S612 in FIG. 8.
FIG. 10b is a specific flowchart of recording a cross-blockchain transaction processing request block to a source blockchain in operation S612 in FIG. 8.
FIG. 11 is a flowchart of a second half of operation S610 in FIG. 5.
FIG. 12 is a schematic diagram of a relationship between a first private key, private key fragments and a first public key in FIG. 11.
FIG. 13 is a flowchart of operation S620 in FIG. 5.
FIG. 14 is a schematic diagram of a data structure of a cross-blockchain transaction processing request block with sub-signatures generated in FIG. 13.
FIG. 15 is a schematic diagram of a data structure of a cross-blockchain transaction processing request block with a first signature generated in operation S630 in FIG. 5.
FIG. 16a is a specific flowchart that a target blockchain network performs second verification on a first signature and processes a cross-blockchain transaction processing request in operation S630 in FIG. 5.
FIG. 16b is a specific flowchart that a target blockchain network performs second verification on a first signature and processes a cross-blockchain transaction processing request in operation S630 in FIG. 5.
FIG. 17 is a schematic diagram of a process during application to a cross-blockchain virtual resource exchange scenario according to an embodiment of this application.
FIG. 18 is a diagram of changes in balances of all virtual resource accounts during application to a cross-blockchain virtual resource exchange scenario according to an embodiment of this application.
FIG. 19 is a schematic diagram of a process during application to a cross-blockchain function calling scenario according to an embodiment of this application.
FIG. 20 is a diagram of a change in a balance of a first virtual resource account of a first object during application to a cross-blockchain function calling scenario according to an embodiment of this application.
FIG. 21 is a schematic diagram of a process during application to a multi-blockchain resource aggregation statistics scenario according to an embodiment of this application.
FIG. 22 is a schematic diagram of an aggregation statistics process during application to a multi-blockchain resource aggregation statistics scenario according to an embodiment of this application.
FIG. 23 is a structural diagram of a terminal that performs a method for processing cross-blockchain transactions in FIG. 5 according to an embodiment of this application.
FIG. 24 is a structural diagram of a server that performs a method for processing cross-blockchain transactions in FIG. 5 according to an embodiment of this application.

### DESCRIPTION OF EMBODIMENTS

To make the objectives, technical solutions, and advantages of this application clearer, the following further describes this application in detail with reference to the accompanying drawings and the embodiments. The specific embodiments described here are merely intended to explain this application, instead of limiting this application.

Before the embodiments of this application are further described in detail, a description is made on nouns and terms involved in the embodiments of this application. The nouns and terms involved in the embodiments of this application are applicable to the following explanations.

Blockchain: Blockchain is a new application mode of a computer technology such as distributed data storage, point-to-point transmission, a consensus mechanism, and an encryption algorithm. Blockchain is essentially a decentralized database, and is a string of associated data blocks generated in a cryptographic manner. Each data block contains information about a batch of transactions, which is configured for performing verification on the validity of the information (anti-counterfeiting) and associating a previous data block.

Threshold Signature Scheme (TSS): It is an important branch of digital signature, a cryptographic technology based on Secure Multi-Party Computation (MPC), and an important research direction in MPC key management. TSS has the characteristic that a signature is certainly generated by a private key, but this private key will not be fully mastered by anyone. Instead, it will be divided into many fragments in some way. These fragments may be held by multiple people at the same time. Then, through MPC protocols, it is ensured that these fragments can directly generate a valid signature without being pieced all together. TSS can achieve off-chain aggregation, and requires only one on-chain signature submission.

Oracle machine: It is a mechanism for writing information from the outside of the blockchain into the blockchain, commonly known as an oracle machine. Oracle machine is a trustworthy entity that introduces information about the state of the external world through signature, thus allowing a deterministic smart contract to react to an uncertain external world. Oracle machine has the characteristics of immutability, stable service, auditability and the like, and has an economic incentive mechanism to ensure the power of operation.

### Description of architecture of system to which embodiments of this application are applied

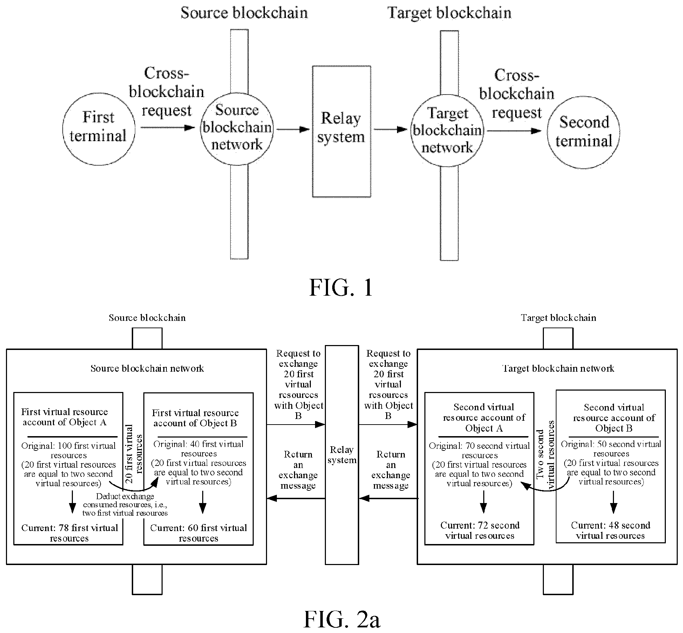

Referring to FIG. 1, the architecture of a system to which a method for processing cross-blockchain transactions is applied according to an embodiment of this application includes a first terminal, a source blockchain network, a relay system, a target blockchain network, and a second terminal.

The first terminal is a terminal that initiates a cross-blockchain transaction processing request. The first terminal may be manifested in various forms such as desktop computers, laptops, mobile phones, Personal Digital Assistants (PDAs), vehicle-mounted terminals, dedicated terminals, and servers. The cross-blockchain transaction processing request refers to a request from a source blockchain to a target blockchain. The cross-blockchain transaction processing request may be a request to exchange or transfer a resource, call a function, or aggregates resources. The reason for generating the cross-blockchain transaction processing request is that in the blockchain technology, different blockchain networks maintain different blockchains. Therefore, when one blockchain network needs information on a blockchain maintained by another blockchain network, or requests another blockchain network to perform a certain operation, a cross-blockchain transaction processing request needs to be initiated.

The source blockchain network is a set of multiple service nodes that record blocks onto the source blockchain. After the multiple service nodes reach a consensus on a block generated by one of the service nodes, the block is recorded onto the source blockchain maintained by the source blockchain network. After the resource blockchain network receives the cross-blockchain transaction processing request, the cross-blockchain transaction processing request will be transmitted to the relay system.

The relay system is located between the source blockchain network and the target blockchain network, and is a unit that solves the trust problem of the cross-blockchain transaction. It is also a core processing unit of the method for processing cross-blockchain transactions according to this embodiment of this application. The main purpose of the cross-blockchain transaction is to solve the trust problem between the source blockchain network and the target blockchain network, so that the source blockchain network can obtain information from the target blockchain network or perform an operation through the target blockchain network. How to solve the trust problem will be elaborated below in the detailed description of the method for processing cross-blockchain transactions according to this embodiment of this application. Since the relay system is trustworthy, the cross-blockchain transaction processing request may be transmitted to the target blockchain network through the processing by the relay system.

The target blockchain network is a set of multiple service nodes that record blocks onto the target blockchain. After the multiple service nodes reach a consensus on a block generated by one of the service nodes, the block is recorded onto the target blockchain maintained by the target blockchain network. The target blockchain network receives the cross-blockchain transaction processing request forwarded by the relay system, verifies that it is from the relay system, and may complete the relevant transaction processing in response to the cross-blockchain transaction processing request.

The second terminal is a terminal in the target blockchain network. When a service node in the target blockchain network executes the cross-blockchain transaction processing request, if the second terminal is involved, the second terminal is notified. The form of the second terminal is similar to that of the first terminal, which will not be repeated here.

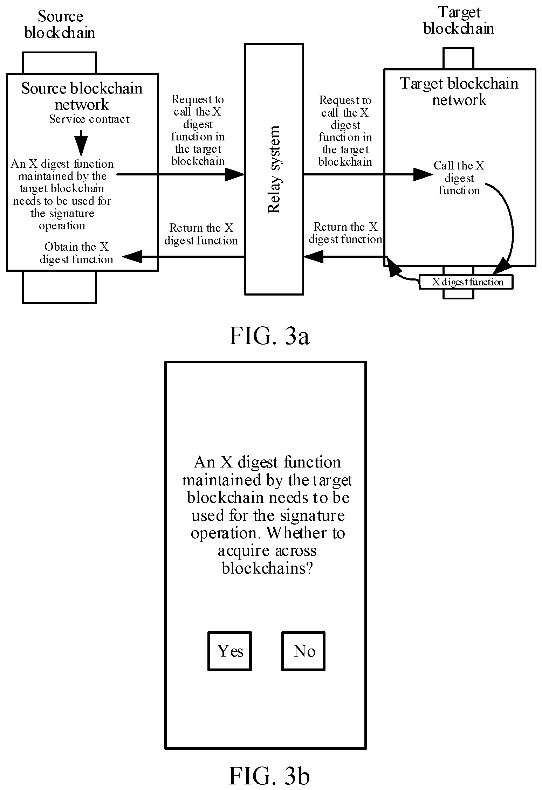

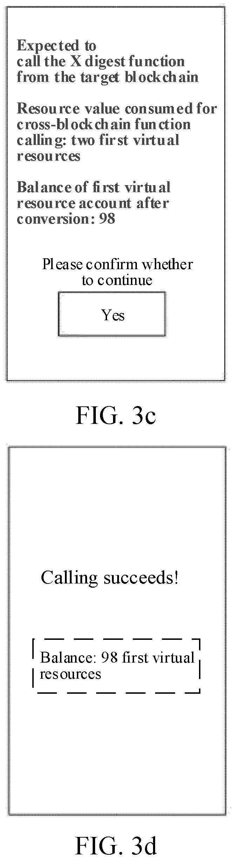

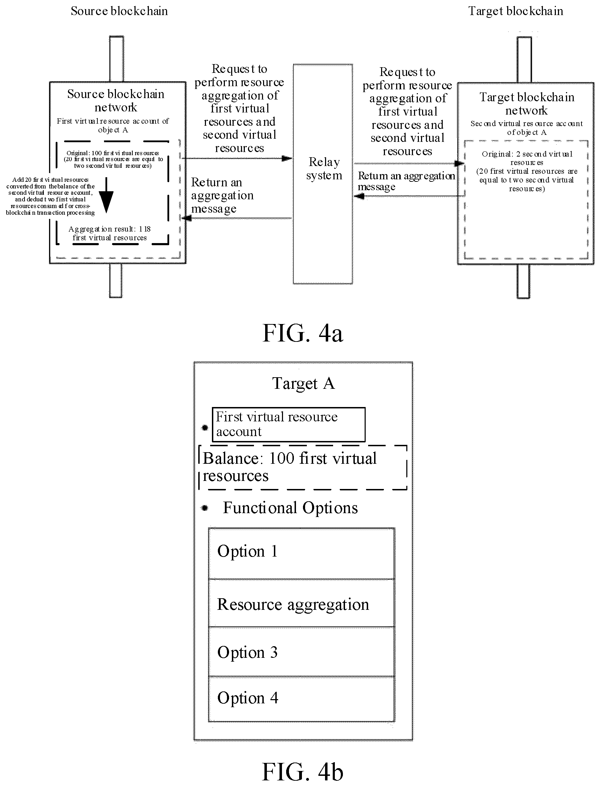

Embodiments of this application may be applied to various scenarios, such as a cross-blockchain virtual resource exchange scenario shown in FIG. 2a to FIG. 2e, a cross-blockchain function calling scenario shown in FIG. 3a to FIG. 3d, and a multi-blockchain resource aggregation statistics scenario shown in FIG. 4a to FIG. 4e.

### (I) Cross-blockchain virtual resource exchange scenario

A blockchain is a distributed storage database that may be configured to bookkeep transactions of virtual resources. Different virtual resources may be bookkept on different blockchains. Objects may exchange virtual resources on one blockchain for virtual resources on another blockchain.

As shown in FIG. 2a, Object A has a first virtual resource account on the source blockchain network, and an initial balance of the first virtual resource account of Object A is 100 first virtual resources. Object B also has a first virtual resource account on the source blockchain network, and an initial balance of the first virtual resource account of Object B is 40 first virtual resources. At the same time, Object A has a second virtual resource account on the target blockchain network, and an initial balance of the second virtual resource account of Object A is 70 second virtual resources. Object B also has a second virtual resource account on the target blockchain network, and an initial balance of the second virtual resource account of Object B is 50 second virtual resources. An exchange rate between two different virtual resources is 10 to 1, to be specific, 20 first virtual resources are equal to two second virtual resources.

When Object A requests to exchange first virtual resources of Object A for second virtual resources of Object B, the source blockchain network where Object A is located firstly transmits a cross-blockchain transaction processing request to the relay system, requesting to exchange 20 first virtual resources with Object B. After receiving the cross-blockchain transaction processing request, the relay system performs processing, signature, and verification, and then pushes the cross-blockchain transaction processing request to the target blockchain network, requesting to exchange 20 first virtual resources with Object B. When the target blockchain network makes a response to the cross-blockchain transaction processing request, it adds two second virtual resources to the second virtual resource account of Object A according to the current exchange rate. After the balance of the second virtual resource account is newly added, the balance of the second virtual resource account of Object A is 72 second virtual resources. At the same time, two second virtual resources are subtracted from the second virtual resource account of Object B, and the balance of the second virtual resource account of Object B becomes 48 second virtual resources. Then, the target blockchain network returns an exchange message to the relay system, which is then returned to the source blockchain network after passing through the relay system. Based on this, the source blockchain network subtracts 20 first virtual resources from the first virtual resource account of Object A, and simultaneously deducts two first virtual resources consumed by the source blockchain network, the relay system, and the target blockchain network during exchange execution. The balance of the first virtual resource account of Object A becomes 78 first virtual resources. 20 first virtual resources are added to the first virtual resource account of Object B, and the balance of the first virtual resource account of Object B becomes 60 first virtual resources.

From the above scenario, it can be clearly seen that when cross-blockchain virtual resource exchange is performed, it cannot be completed on a single blockchain network and requires the use of the method for processing cross-blockchain transactions according to this embodiment of this application.

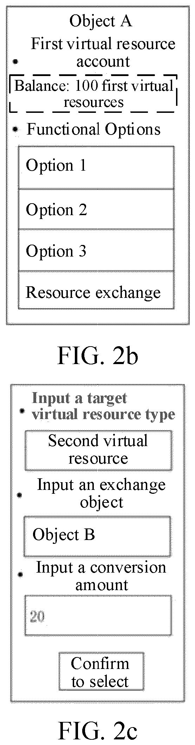

FIG. 2b to FIG. 2e illustrate an interface interaction process of this scenario.

As shown in FIG. 2b, Object A may view the balance of the first virtual resource account of Object A in a virtual resource management interface of the first terminal, which may be displayed in the figure as "Balance: 100 first virtual resources". Object A may also view multiple exemplary functional options, such as "Option 1" to "Option 3". The functional options may also include the functional option "Resource exchange".

As shown in FIG. 2c, after Object A selects the functional option "Resource exchange" in FIG. 2b, the interface of the first terminal displays multiple input boxes such as "Enter target virtual resource type", "Enter exchange object", and "Enter amount to be converted". "Enter target virtual resource type" is configured to enter the target virtual resource type for this cross-blockchain virtual resource exchange. For example, "Second virtual resource" may be entered, and the corresponding virtual resource exchange is performed between the first virtual resource and the second virtual resource. "Enter exchange object" is configured to enter the target object for this cross-blockchain virtual resource exchange. For example, "Object B" may be entered, and the corresponding cross-blockchain virtual resource exchange is performed between Object A and Object B. "Enter amount to be converted" is configured to enter the amount that needs to be exchanged this time. For example, "20" may be entered, and correspondingly, 20 first virtual resources of Object A are exchanged for the second virtual resources. After completing the input of each input box, Object A may select the button "Confirm to select" at the bottom of the interface to complete the confirmation operation of the current interface.

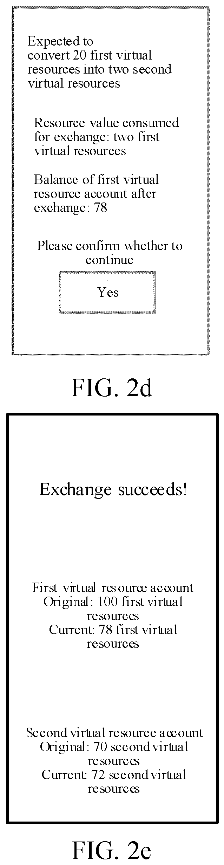

As shown in FIG. 2d, after Object A selects the button "Confirm to select" in FIG. 2c, the interface of the first terminal displays predicted exchange consumed resources and an estimated account balance after exchange. Exchange consumed resources refer resources consumed by the source blockchain network, the relay system, and the target blockchain network. For example, according to the real-time exchange rate, the current exchange rate is estimated to be 10: 1, to be specific, currently, 20 first virtual resources are exchanged for two second virtual resources, and it is estimated that this exchange will cause exchange consumed resources of two first virtual resources. Then, the current account balance is estimated according to the above information, and finally is displayed as, for example, 100 (initial value)-20 (already exchanged for second virtual resources) -2 (exchange consumed resources)=78 (balance). After completing the display of the above information, the interface may display the content "Please confirm whether to continue". Object A may select the button "Yes" at the bottom of the interface to confirm to continue the operation.

As shown in FIG. 2e, after Object A selects "Yes" in FIG. 2d, the interface of the first terminal displays the result of the current cross-blockchain virtual resource exchange. If it succeeds, "Exchange succeeds!" will be displayed. In addition, the balance of the account of Object A may also be displayed on the current page. The initial value of the first virtual resource account of Object A is 100 first virtual resources and the balance is 78 first virtual resources. The initial value of the second virtual resource account of Object A is 70 first virtual resources and the balance is 72 second virtual resources.

### (II) Cross-blockchain function calling scenario

Cross-blockchain function calling refers to that cross-blockchain function calling is required in the process where an object executes the service contract and the service contract calls various functions, since some functions exist on the blockchain where the service contract is located and can be directly acquired on the blockchain, and others exist on other blockchains maintained by other blockchain networks. The problem of distrust caused by cross-blockchain function calling may be solved through the method for processing cross-blockchain transactions according to this embodiment of this application.

As shown in FIG. 3a, in the process that Object A on the source blockchain network executes the service contract, in order to perform a signature operation, an X digest function is needed. However, the X digest function is not on the source blockchain, but on the target blockchain maintained by the target blockchain network, so cross-blockchain function calling is required. The source blockchain network where Object A is located firstly transmits a cross-blockchain transaction processing request to the relay system, requesting to call a Y function in the target blockchain. After receiving the cross-blockchain transaction processing request, the relay system performs processing, verification, and signature, and then pushes the cross-blockchain transaction processing request to the target blockchain network, requesting to call the Y function in the target blockchain. The target blockchain network returns the X digest function to the source blockchain network through the relay system.

FIG. 3b to FIG. 3d are schematic diagrams of interfaces in this scenario.

As shown in FIG. 3b, "X digest function maintained by the target blockchain needs to be used for the signature operation. Whether to acquire across blockchains?" is displayed on the interface of the first terminal of Object A. Object A selects "Yes" on the interface.

After Object A selects "Yes" on the interface shown in FIG. 3b, the interface shown in FIG. 3c appears, displaying that the estimated exchange consumed resources for calling the X digest function from the target blockchain are two first virtual resources, and the balance of the first virtual resource account of Object A will become 98 first virtual resources. The interface in FIG. 3c also prompts Object A to continue or not. To continue, Object A may select "Yes".

After Object A selects "Yes" in FIG. 3c, the interface of the first terminal displays the result of the cross-blockchain function calling. If it succeeds, "Calling succeeds!" will be displayed. In addition, the balance of the first virtual resource account of Object A may also be displayed as, for example, "Balance: 98 first virtual resources".

### (III) Multi-blockchain resource aggregation statistics scenario

An object may have virtual resources of corresponding virtual resource types on different blockchains. (For example, an object may have first virtual resources on a blockchain where the first virtual resources are bookkept and second virtual resources on a blockchain where the second virtual resources are bookkept.) Multi-blockchain resource aggregation statistics refer to aggregating resources owned by an object on different blockchains, and calculating the total quantity of resources. Due to the need for collaboration between different blockchain networks for the statistics, the problem of distrust may occur. Therefore, the method for processing cross-blockchain transactions according to this embodiment of this application may be applied.

As shown in FIG. 4a, Object A has a first virtual resource account on the source blockchain network, with an initial value of 100 first virtual resources, and a second virtual resource account on the target blockchain network, with an initial value of two second virtual resources. At this moment, the exchange rate between two different virtual resources is 10: 1, to be specific, 20 first virtual resources are equal to two second virtual resources. When Object A initiates multi-blockchain resource aggregation statistics on the source blockchain network, the source blockchain network firstly transmits a cross-blockchain transaction processing request to the relay system, requesting to perform cross-blockchain resource aggregation statistics. After receiving the cross-blockchain transaction processing request, the relay system performs processing, signature, and verification, and then pushes the cross-blockchain transaction processing request to the target blockchain network, requesting to perform resource aggregation statistics on the second virtual resource account of Object A. The target blockchain network returns an aggregation message to the source blockchain network through the relay system, to tell the balance of the second virtual resource account of Object A. The source blockchain network converts the balance, i.e., two second virtual resources, of the second virtual resource account of Object A on the target blockchain network into 20 first virtual resources according to an exchange rate of 10: 1, and performs aggregation statistics on them with the initial value, i.e., 100 first virtual resources, of the first virtual resource account of Object A on the source blockchain network to obtain 120 first virtual resources. Two first virtual resources consumed for exchange are deducted to obtain an aggregation statistics result, i.e., 118 first virtual resources.

FIG. 4b to FIG. 4e illustrate schematic diagrams of interfaces in this scenario.

As shown in FIG. 4b, Object A may view the balance of the first virtual resource account of Object A in the interface of the first terminal, which may be displayed in the figure as "Balance: 100 first virtual resources". The interface also displays multiple exemplary functional options, such as "Option 1" to "Option 4", including the functional option "Resource aggregation".

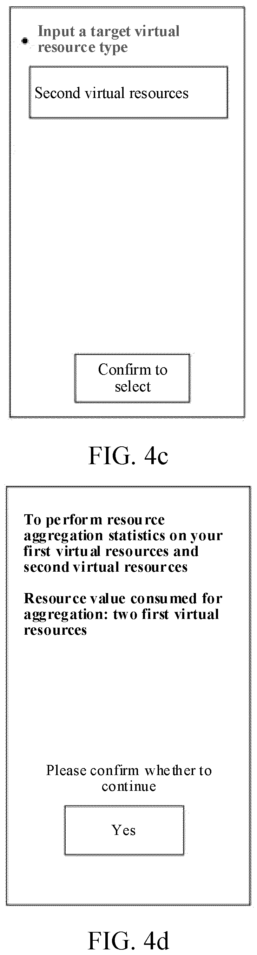

After Object A selects the functional option "Resource aggregation" in FIG. 4b, As shown in FIG. 4c, the interface of the first terminal displays the input box "Enter target virtual resource type", which is configured to enter the target virtual resource type for multi-blockchain resource aggregation statistics. For example, "Second virtual resource" may be entered. At this moment, what is performed is the resource aggregation between the first virtual resource account and the second virtual resource account of Object A.

After Object A selects "Confirm to select" in FIG. 4c, as shown in FIG. 4d, the interface of the first terminal displays the estimated exchange consumed resources required for the multi-blockchain resource aggregation statistics. The content "Please confirm whether to continue" may also be displayed below the interface. Object A may select the button "Yes" below to confirm to continue the operation.

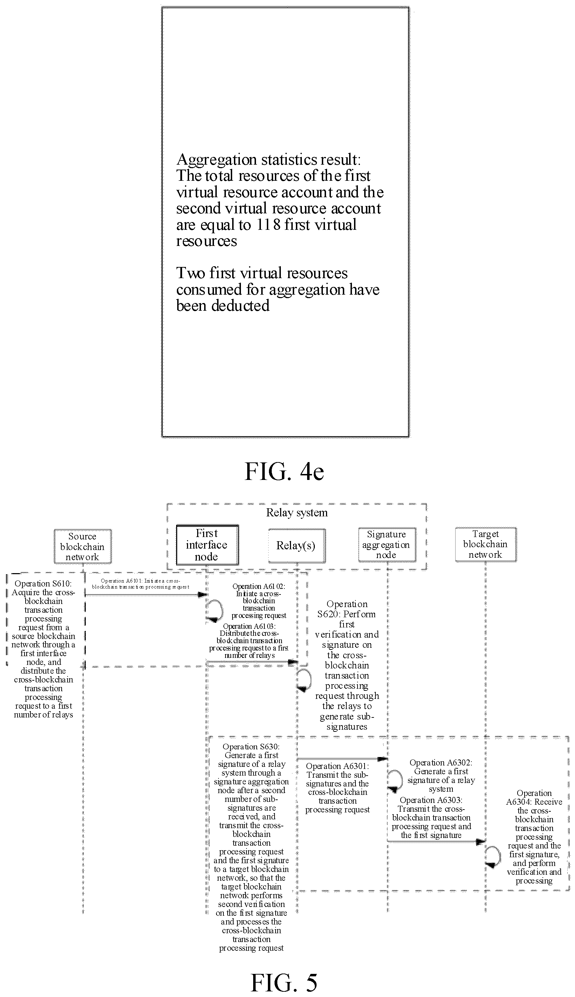

After Object A selects "Yes" in FIG. 4d, as shown in FIG. 4e, the interface of the first terminal displays the aggregation statistics result of the resources of Object A, such as "The total resources of the first virtual resource account and the second virtual resource account are equivalent to 118 first virtual resources, with two first virtual resources consumed for exchange deducted".

### Overall description of embodiments of this application

According to an embodiment of this application, a method for processing cross-blockchain transactions is provided. Cross-blockchain transaction processing refers to transaction processing that requires interaction between multiple blockchain networks, such as cross-blockchain virtual resource exchange in FIG. 2a to FIG. 2e, cross-blockchain function calling in FIG. 3a to FIG. 3d, and multi-blockchain resource aggregation statistics in FIG. 4a to FIG. 4e. The method for processing cross-blockchain transactions is executed by a relay system between a source blockchain network and a target blockchain network. The relay system includes a first interface node, a first number of relays, and a signature aggregation node. The first number is an integer greater than 1.

As shown in FIG. 5, the method for processing cross-blockchain transactions according to this embodiment of this application may include the following operations.

Operation S610: A cross-blockchain transaction processing request from a source blockchain network is acquired through a first interface node, and the cross-blockchain transaction processing request is distributed to the first number of relays.

Operation S620: First verification and signature are performed on the cross-blockchain transaction processing request through the relays to generate sub-signatures.

Operation S630: A first signature of the relay system is generated after receiving a second number of sub-signatures through the signature aggregation node, and the cross-blockchain transaction processing request and the first signature are transmitted to the target blockchain network, so that the target blockchain network performs second verification on the first signature and processes the cross-blockchain transaction processing request, the second number being an integer greater than 1 and smaller than or equal to the first number.

Operation S610 to operation S630 will be described below in detail.

In operation S610, the first interface node is a module configured in the relay system to discover the cross-blockchain transaction processing request. It may be an independent device, such as a separate computer or server, or a part of an independent device, such as a virtual machine partitioned on a server.

As shown in FIG. 5, operation S610 may be divided into interaction processes that the source blockchain network initiates the cross-blockchain transaction processing request (operation A6101), the first interface node initiates the cross-blockchain transaction processing request (operation A6102), and the first interface node distributes the cross-blockchain transaction processing request to the first number of relays (operation A6103). The cross-blockchain transaction processing request is a request configured to perform a cross-blockchain transaction (such as cross-blockchain virtual resource exchange, cross-blockchain function calling, or multi-blockchain resource aggregation statistics). Since the biggest obstacle in the cross-blockchain transaction is the lack of trust between different blockchain networks, although the method of bookkeeping to a relay blockchain in the related art can solve the trust problem, significant overhead is introduced due to the need to maintain one relay blockchain. Therefore, in this embodiment of this application, the relay blockchain is discarded and replaced with multiple relays. The first interface node transmits the same cross-blockchain transaction processing request to the multiple relays. The multiple relays respectively perform verification on the cross-blockchain transaction processing request. Since many relays have performed verification and are neutral, the problem of distrust can be eliminated for the target blockchain network, and the additional overhead of the relay blockchain can be eliminated.

In operation S620, the relay is a component configured in the relay system to perform first verification on the cross-blockchain transaction processing request. The first verification is configured to verify that the cross-blockchain transaction processing request is really made by the source blockchain network and there is no cheating behavior. It may be an independent device, such as a separate computer or server, or a part of an independent device, such as a virtual machine partitioned on a server. The sub-signature is a proof made by the relay that the cross-blockchain transaction processing request is real and valid. The first number may be the total quantity of relays configured in the relay system, and the quantity of relays performing the first verification may be the first number or slightly smaller than the first number, which is not specifically limited here.

In operation S630, the signature aggregation node is a module configured in the relay system to perform aggregation processing on the sub-signatures made by the relays. It may be an independent device, such as a separate computer or server, or a part of an independent device, such as a virtual machine partitioned on a server.

As shown in FIG. 5, operation S630 may be divided into the following interaction processes: the relays transmit the sub-signatures and the cross-blockchain transaction processing request to the signature aggregation node (operation A6301); after receiving the second number of sub-signatures, the signature aggregation node generates a first signature of the relay system (operation A6302); the signature aggregation node transmits the cross-blockchain transaction processing request and the first signature to the target blockchain network (operation A6303); the target blockchain network receives the cross-blockchain transaction processing request and the first signature, and performs verification and processing (operation A6304).

The second number is smaller than the first number. It means that the signature aggregation node may publish the official signature of the relay system without waiting for all the first number of relays to complete signature, thus ensuring both the security and processing efficiency. However, the second number is also a considerable number. After the target blockchain network receives the cross-blockchain transaction processing request and the first signature, a sufficient number of relays (at least a second number of relays) have successfully completed verification. Since the relays are neutral, the cross-blockchain transaction processing request is trustworthy, thus ensuring the security of cross-blockchain transaction processing. After receiving the cross-blockchain transaction processing request and the first signature, the target blockchain network only needs to verify that the first signature is really made by the relay system, without verifying whether the cross-blockchain transaction processing request is real. This is equivalent to a sufficient number of relays in the relay system providing a guarantee for the trustworthiness of the cross-blockchain transaction processing request.

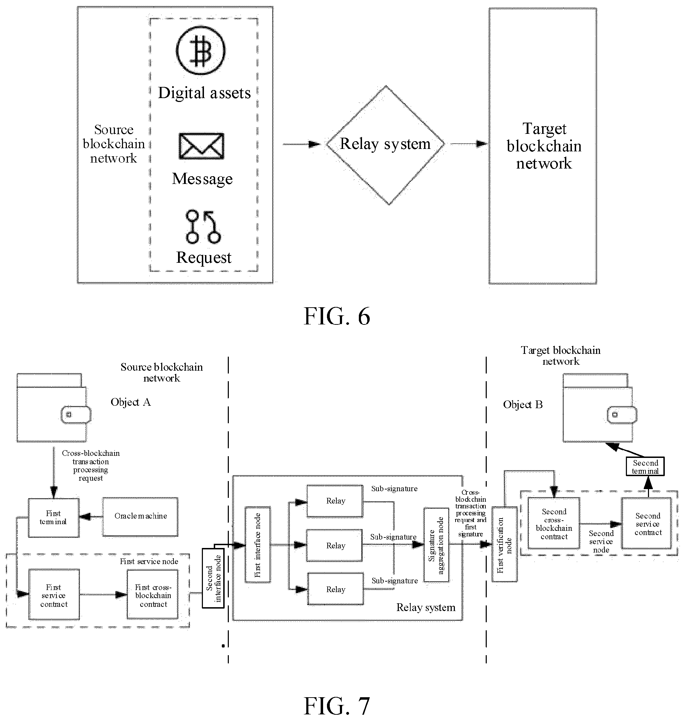

As shown in FIG. 6, the method for processing cross-blockchain transactions provided in this embodiment of this application satisfies the cross-blockchain transaction processing request from the source blockchain network to the target blockchain network through the relay system with the multiple relays. This cross-blockchain transaction may involve digital resources (for example, in the cross-blockchain virtual resource exchange scenario and the multi-blockchain resource aggregation statistics scenario described above), message notification (for example, the processing result of one blockchain network needs to be notified to another blockchain network or recorded on a blockchain maintained by another blockchain network), requests (for example, in the cross-blockchain function calling scenario described above), and so on.

FIG. 7 is a structural diagram showing performing the method for processing cross-blockchain transactions according to this embodiment of this application. This structure is divided into a source blockchain network, a relay system, and a target blockchain network. The various modules included in the relay system have been described with reference to FIG. 5. The various modules included in the source blockchain network and the target blockchain network will be described in detail in the following part related to the source blockchain network and the target blockchain network.

The above is an overall description of operation S610 to operation S630. Below, a detailed description will be provided for the specific implementation of each operation of operation S610 to operation S630.

### Detailed description of operation S610

In operation S610, a cross-blockchain transaction processing request from a source blockchain network is acquired through a first interface node, and the cross-blockchain transaction processing request is distributed to a first number of relays.

Below is a description of the first half of operation S610, i.e., the specific implementation process of acquiring the cross-blockchain transaction processing request from the source blockchain network through the first interface node.

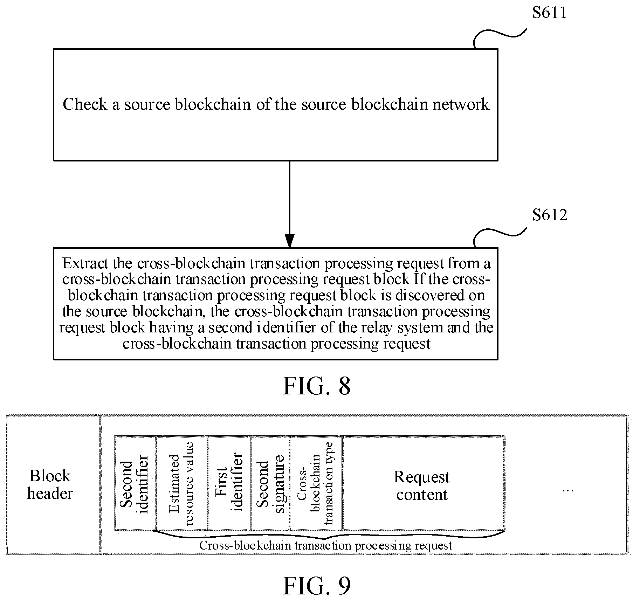

As shown in FIG. 8, in an embodiment, the first half of operation S610 may include the following operations:
Operation S611: A source blockchain of the source blockchain network is checked.
Operation S612: The cross-blockchain transaction processing request is extracted from a cross-blockchain transaction processing request block if the cross-blockchain transaction processing request block is discovered on the source blockchain, the cross-blockchain transaction processing request block having a second identifier of the relay system and the cross-blockchain transaction processing request.

After the source blockchain network generates the cross-blockchain transaction processing request, it adopts a chaining method, i.e., a method of recording it on the source blockchain. The cross-blockchain transaction processing request block is a chained block that contains the cross-blockchain transaction processing request. In addition to the cross-blockchain transaction processing request, as shown in FIG. 9, a block body of this block further contains a second identifier. The second identifier is a unique identifier assigned to the relay system to which the cross-blockchain transaction processing request is transmitted. Some of the blocks recorded on the source blockchain are for public to view, some of the blocks are for the source blockchain network to view in the future, and only some of the blocks are for the relay systems to view for verification. In addition, even the blocks for the relay systems to view also need to be distinguished due to the presence of different relay systems. Therefore, in the above embodiment, a second identifier is assigned to the relay system to which the cross-blockchain transaction processing request is transmitted. When the source blockchain network records the cross-blockchain transaction processing request block on the source blockchain, the second identifier is recorded in the block together with the cross-blockchain transaction processing request. In operation S611, the first interface node checks each block newly recorded to the source blockchain. If the second identifier of the relay system is discovered in the block, then in operation S612, it is considered that the cross-blockchain transaction processing request block with the second identifier has been discovered, and the cross-blockchain transaction processing request recorded together with the second identifier is extracted from the cross-blockchain transaction processing request block.

In the above embodiment, as long as a second identifier is discovered in the new block, it is considered that the cross-blockchain transaction processing request block has been discovered on the source blockchain. In another embodiment, the source blockchain network may record a specific cross-blockchain transaction processing request identifier in the cross-blockchain transaction processing request block together with the second identifier and the cross-blockchain transaction processing request. In this case, the second identifier only represents the identity of the relay system to which the cross-blockchain transaction processing request is transmitted, and this cross-blockchain transaction processing request identifier is used for indicating that the block is a cross-blockchain transaction processing request block. In operation S611, the first interface node checks each block newly recorded to the source blockchain. If it is discovered that the block has the cross-blockchain transaction processing request identifier and the second identifier, the cross-blockchain transaction processing request in the block is a cross-blockchain transaction processing request that the relay system needs to process, and is extracted from the block in operation S612.

Through the embodiments of operation S611 to operation S612 described above, the first interface node uses the second identifier to accurately determine whether the block newly recorded to the source blockchain contains a cross-blockchain transaction processing request for own verification, thus achieving quick differentiation of cross-blockchain transaction processing requests to be verified by different relay systems in the presence of multiple relay systems, and improving the extensibility of the relay system in this embodiment of this application.

In another embodiment, the source blockchain network may not record on the source blockchain, but directly transmit the cross-blockchain transaction processing request to the relay system. However, the method of recording on the source blockchain facilitates the formation of evidence afterwards, thus auditing the fairness of verification by relay nodes. Due to the existence of the original cross-blockchain transaction processing request on the source blockchain, it is beneficial for public supervision, thus reducing the possibility of cheating in the relay system and improving the security.

Below is a detailed description of the formation and chaining process of the cross-blockchain transaction processing request block. Before the process is described, it is necessary to firstly understand the structure of the source blockchain network. As shown in FIG. 7, the source blockchain network includes a first terminal, an oracle machine, a first service node, and a second interface node.

The first terminal is a terminal that receives the cross-blockchain transaction processing request transmitted by the object. The first terminal may be manifested in various forms such as desktop computers, laptops, mobile phones, Personal Digital Assistants (PDAs), vehicle-mounted terminals, dedicated terminals, and servers.

The oracle machine is a device that acquires off-chain information required for the cross-blockchain transaction. One part of the information required in the cross-blockchain transaction may be obtained from the information already recorded on the blockchain, while the other part of the information cannot be obtained through the information already recorded on the blockchain and can be obtained through the oracle machine. In this embodiment of this application, the oracle machine is mainly configured to estimate the resources consumed for processing the cross-blockchain transaction processing request, as well as the exchange rate when converting different types of virtual resources. This part of the information cannot be obtained from the information recorded in the source blockchain before the cross-blockchain transaction is performed. The oracle machine may be a dedicated terminal, a server, or a part of a server (such as a virtual machine), or a cluster of multiple servers.

The first service node is a node in the source blockchain network that records a block onto the source blockchain, and is also a node in the source blockchain network that executes various contracts (service contracts, cross-blockchain contracts, etc.). It may be manifested in various forms such as desktop computers, laptops, mobile phones, Personal Digital Assistants (PDAs), vehicle-mounted terminals, dedicated terminals, and servers.

The second interface node is an interface between the source blockchain network and the relay system. It is configured to record the cross-blockchain transaction processing request block that has been verified by the relay system onto the source blockchain, for the relay system to discover and extract the cross-blockchain transaction processing request. It may be manifested in various forms such as desktop computers, laptops, mobile phones, Personal Digital Assistants (PDAs), vehicle-mounted terminals, dedicated terminals, and servers.

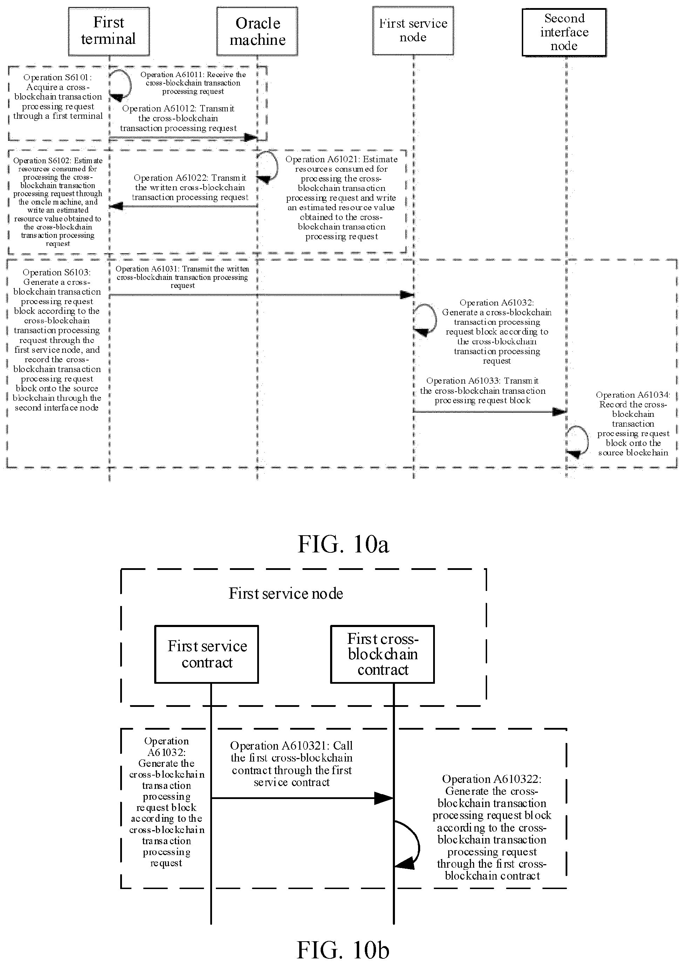

As shown in FIG. 10a, the cross-blockchain transaction processing request block is recorded to the source blockchain according to the following method:
Operation S6101: The cross-blockchain transaction processing request is received through the first terminal.
Operation S6102: Resources consumed for processing the cross-blockchain transaction processing request are estimated through the oracle machine, and an estimated resource value obtained is written to the cross-blockchain transaction processing request.
Operation S6103: The cross-blockchain transaction processing request block is generated according to the cross-blockchain transaction processing request through the first service node, and the cross-blockchain transaction processing request block is recorded onto the source blockchain through the second interface node.

Detailed processes of operation S6101 to operation S6103 will be described below in detail.

As shown in FIG. 10a, operation S6101 is actually divided into processes that the first terminal receives the cross-blockchain transaction processing request from the object (operation A61011) and transmits the cross-blockchain transaction processing request to the oracle machine (operation A61012). In the cross-blockchain virtual resource exchange scenario, the cross-blockchain transaction processing request of the object is generated after Object A selects "Confirm to select" in FIG. 2c. In the cross-blockchain function calling scenario, the cross-blockchain transaction processing request of the object is generated after Object A selects "Yes" in FIG. 3b. In the multi-blockchain resource aggregation statistics scenario, the cross-blockchain transaction processing request of the object is generated after Object A selects "Confirm to select" in FIG. 4c.

As shown in FIG. 10a, operation S6102 is actually divided into processes that the oracle machine estimates the resources consumed for processing the cross-blockchain transaction processing request and writes the obtained exchange consumed resources into the cross-blockchain transaction processing request (operation A61021), and the oracle machine transmits the written cross-blockchain transaction processing request to the first terminal (operation A61022). In the example of cross-blockchain virtual resource exchange shown in FIG. 2d, the estimated resources consumed for processing the cross-blockchain transaction processing request are two first virtual resources. In the example of cross-blockchain function calling shown in FIG. 3c, the estimated resources consumed for processing the cross-blockchain transaction processing request are two first virtual resources. In the example of multi-blockchain resource aggregation statistics shown in FIG. 4d, the estimated resources consumed for processing the cross-blockchain transaction processing request are two first virtual resources.

In an embodiment, the oracle machine estimates the resources consumed for processing the cross-blockchain transaction processing request through the following processes:

The cross-blockchain transaction processing is decomposed into one or more first action elements on the source blockchain network side, one or more second action elements on the relay system side, and one or more third action elements on the target blockchain network side according to predetermined decomposition rules.

A first correspondence table between the first action elements and the consumed resources published by the source blockchain network, a second correspondence table between the second action elements and the consumed resources published by the relay system, and a third correspondence table between the third action elements and the consumed resources published by the target blockchain network are acquired.

Lookup in the first correspondence table is performed based on the one or more first action elements to determine the resources consumed by the one or more first action elements. Lookup in the second correspondence table is performed based on the one or more second action elements to determine the resources consumed by the one or more second action elements. Lookup in the third correspondence table is performed based on the one or more third action elements to determine the resources consumed by the one or more third action elements.

The resources consumed by the one or more first action elements, the resources consumed by the one or more second action elements, and the resources consumed by the one or more third action elements are added up to obtain the estimated resources consumed for processing the cross-blockchain transaction processing request.

In cross-blockchain transaction processing, the source blockchain network side needs to perform several actions, the relay system side needs to perform several actions, the target blockchain network side needs to perform several actions, and each action consumes resources. In the predetermined decomposition rules, for each cross-blockchain transaction, one or more first action elements on the source blockchain network side, one or more second action elements on the relay system side, and one or more third action elements on the target blockchain network side obtained through specific decomposition are given. Action element is the smallest unit of action. Since an action may be composed of multiple minimum units of action, listing the resources consumed by all possible minimum units of action can determine the resources consumed by any action. Therefore, the cross-blockchain transaction processing may be decomposed into one or more first action elements, one or more second action elements, and one or more third action elements according to the predetermined decomposition rules.

Since the resources consumed by each action element may change over time, the source blockchain network may regularly publish the updated first correspondence table between the first action elements and the consumed resources, the relay system may regularly publish the updated second correspondence table between the second action elements and the consumed resources, and the target blockchain network may regularly publish the updated third correspondence table between the third action elements and the consumed resources. The oracle machine acquires the first correspondence table, the second correspondence table, and the third correspondence table according to various methods.

In an acquisition method, once the first correspondence table, the second correspondence table, or the third correspondence table is updated, the source blockchain network broadcasts the updated first correspondence table to each oracle machine, the relay system broadcasts the updated second correspondence table to each oracle machine, and the target blockchain network broadcasts the updated third correspondence table to each oracle machine. In this way, each oracle machine obtains the updated first correspondence table, second correspondence table, and third correspondence table.

In another acquisition method, the source blockchain network publishes the updated first correspondence table on the website of the source blockchain network, the relay system publishes the updated second correspondence table on the website of the relay system, and the target blockchain network publishes the updated third correspondence table on the website of the target blockchain network. After receiving the cross-blockchain transaction processing request, the oracle machine crawls the updated first correspondence table, second correspondence table, and third correspondence table from the websites of the source blockchain network, the relay system, and the target blockchain network.

After obtaining the first correspondence table, the second correspondence table, and the third correspondence table, the oracle machine may look up in the first correspondence table based on the one or more first action elements obtained through decomposition to determine the resources consumed by the one or more first action elements, look up in the second correspondence table based on the one or more second action elements obtained through decomposition to determine the resources consumed by the one or more second action elements, and look up in the third correspondence table based on the one or more third action elements obtained through decomposition to determine the resources consumed by the one or more third action elements. After the resources consumed by the first action elements, the second action elements, and the third action elements are determined, these resources are added up to obtain the estimated resources consumed for processing the cross-blockchain transaction processing request.

In the implementation that the oracle machine estimates the resources consumed for processing the cross-blockchain transaction processing request, the cross-blockchain transaction processing is decomposed into action elements, then the resources consumed by each action element are looked up, and finally these resources are added up. The resources consumed by the action are not fixed, but the resources consumed by the action element as the smallest unit of action are fixed. By looking up in the correspondence tables between the action elements and the consumed resources, the resources consumed for processing the cross-blockchain transaction processing request are quickly and efficiently estimated, thus achieving high efficiency and accuracy.

In an embodiment, in order to ensure stable cross-blockchain transaction processing, the oracle machine may also add up a certain proportion (such as 30%) of the resources consumed by the first action elements, the second action elements, and the third action elements after determining the resources consumed by the first action elements, the second action elements, and the third action elements, as estimated resources consumed for processing the cross-blockchain transaction processing request. By reserving a certain amount of cost space for the estimated resource value, in the cross-blockchain transactions, the cross-blockchain transactions will not be interrupted because of insufficient estimated resources due to a sudden increase in resource consumption caused by some accidental operations.

After the estimated resource value is written into the cross-blockchain transaction processing request, as shown in FIG. 9, the estimated resource value is used as a field of the cross-blockchain transaction processing request.

As shown in FIG. 10a, operation S6103 is actually divided into the following operations: the first terminal transmits the written cross-blockchain transaction processing request to the first service node (operation A61031), the first service node generates a cross-blockchain transaction processing request block according to the cross-blockchain transaction processing request (operation A61032), the first service node transmits the cross-blockchain transaction processing request block to the second interface node (operation A61033), and the second interface node records the cross-blockchain transaction processing request block onto the source blockchain (operation A61034). When the first service node generates the cross-blockchain transaction processing request block according to the cross-blockchain transaction processing request, as shown in FIG. 9, the second identifier and the cross-blockchain transaction processing request are recorded together into the cross-blockchain transaction processing request block.

The embodiments of operation S6101 to operation S6103 have the advantage that the efficiency of chaining the cross-blockchain transaction processing request block is improved by generating and chaining the cross-blockchain transaction processing request block through the cooperation among the first terminal, the oracle machine, the first service node, and the second interface node. Moreover, by introducing the oracle machine, the objects' perception of the exchange consumed resources in the cross-blockchain transactions is improved. The transparency of the existing cross-blockchain solutions is too low, and objects have weak perception of resources consumed in the cross-blockchain transactions, resulting in losses on objects' assets. This embodiment overcome this problem by introducing the oracle machine.

In an embodiment, the first service node has a first service contract and a first cross-blockchain contract. A service contract refers to a contract established in advance between an object and a blockchain network for executing various blockchain network related services for the object. A cross-blockchain contract refers to a contract for processing a cross-blockchain transaction, which specifies rules that a blockchain network and other blockchain networks need to follow when performing a cross-blockchain transaction.

As shown in FIG. 10b, in an embodiment, operation A61032 specifically includes the following operations:
Operation A610321: The first cross-blockchain contract is called through the first service contract.
Operation A610322: The cross-blockchain transaction processing request block is generated according to the cross-blockchain transaction processing request through the first cross-blockchain contract.

When a non-cross-blockchain ordinary service is performed on the source blockchain network, the first service contract is executed. When a cross-blockchain service needs to be performed, in operation A610321, the first cross-blockchain contract is called through the first service contract. For example, the first service contract is that Object A performs signature, and a digest algorithm X is used in the signature. Acquiring the digest algorithm X is a cross-blockchain transaction, and the first service contract needs to call the first cross-blockchain contract. Other processes of the signature do not involve cross-blockchain transactions, and thus are executed by the first service contract.

In operation A610322, the cross-blockchain transaction processing request block is generated according to the cross-blockchain transaction processing request through the first cross-blockchain contract. In subsequent operation A61033, the first cross-blockchain contract transmits the cross-blockchain transaction processing request block to the second interface node for chaining by the second interface node.

The embodiments of operation A610321 to operation A610322 have the advantage that the efficiency of generating the cross-blockchain transaction processing request block is improved through the cooperation between the first service contract and the first cross-blockchain contract.

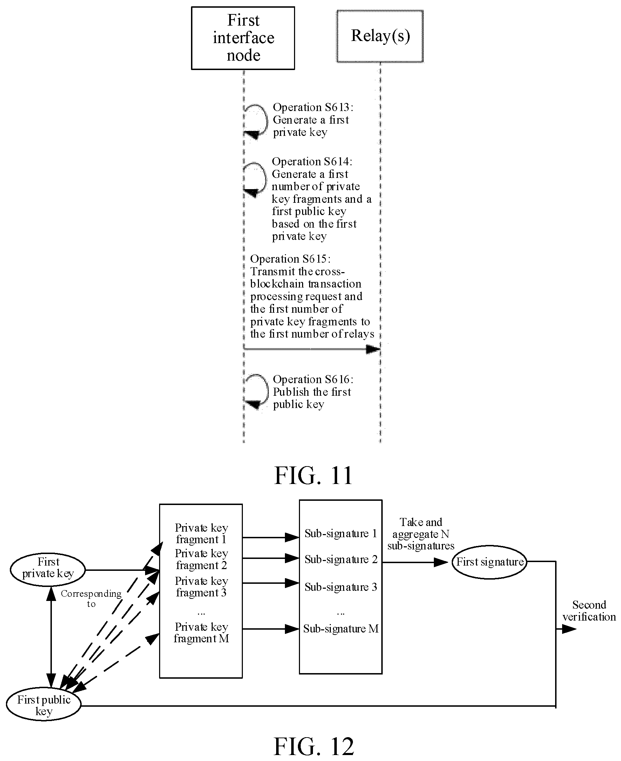

Next, the second half of operation S610 will be described in detail, where the first interface node distributes the cross-blockchain transaction processing request to the first number of relays. As shown in FIG. 11, in an embodiment, the second half of operation S610 may specifically include the following operations:
Operation S613: A first private key is generated.
Operation S614: A first number of private key fragments and a first public key are generated based on the first private key.
Operation S615: The cross-blockchain transaction processing request and the first number of private key fragments are transmitted to the first number of relays.
Operation S616: The first public key is published.

The first private key is a private key used in the signature by the relay system. The first public key is a public key corresponding to the first private key, and is used for decrypting the first signature generated by using the first private key. In this embodiment of this application, the first private key is not directly used for signing the cross-blockchain transaction processing request. Instead, the first private key is divided into several private key fragments, and each relay generates a sub-signature by using a private key fragment. Then, the sub-signatures generated by the multiple relays are aggregated to generate the first signature of the entire relay system for the cross-blockchain transaction processing request. The result of this first signature is the same as performing signature on the cross-blockchain transaction processing request by directly using the first private key.

In operation S613, the first private key may be generated by adopting the method of generating random numbers.

In operation S614, the first public key may be generated by adopting the existing public and private key pairing method. Generating the first number of private key fragments based on the first private key is not to simply divide the first private key, but to use methods such as one-variable multiple-order function method to covertly generate private key fragments. Simply stacking the first number of private key fragments cannot obtain the first private key. The first private key can only be obtained through inherent operations of the one-variable multiple-order function method. This configuration has the advantage of preventing a third party from simply stacking the first number of private key fragments to obtain the first private key, thus improving the security of the first private key. Moreover, this inherent operation method allows for the restoration of the first private key by only obtaining the second number of private key fragments, without obtaining the first number of private key fragments. Its principle is as follows:

A one-variable (n-1)-order function Y=*a*_{*n*-1}*x*^{*n*-1}+*a*_{*n*-2}*x*^{*n*-2}...+*a*₁ *x+a*₀ is constructed, where n is the second number which is a positive integer greater than or equal to 2, and *a*₀ is the first private key. When the first number of private key fragments are generated based on the first private key, *x* may be set to *x*₁, *x*₂ ... *xₘ* respectively. For example, *x* may be set to 1, 2 ... m respectively (m is the first number and m is greater than n), and substituted into Y=*a*_{*n*-1}*x*^{*n*-1}+*a*_{*n*-2}*x*^{*n*-2}*...+a*₁ *x+a*₀ to obtain Y which is *y*₁, *y*₂ ... *yₘ* respectively, as the first number of private key fragments generated based on the first private key *a*₀. In other words, the curve of Y=*a*_{*n*-1}*x*^{*n*-1}+*a*_{*n*-2}*x*^{*n*-2}...+*a*₁ *x+a*₀ respectively passes through (*x*₁,*y*₁), (*x*₂,*y*₂), *...* (*xₘ,yₘ*). However, in fact, to calculate these n unknown coefficients, i.e., *a*_{*n*-1}, *a*_{*n*-2} ... *a*₀, only n points are needed, rather than m points are needed. Therefore, only the second number n of private key fragments are needed to restore the first private key *a*₀. In this way, after the second number of sub-signatures generated by the relays by using the private key fragments are all collected, the second number of private key fragments can be derived therefrom, and the first private key *a*₀ is restored accordingly, so as to use the first private key *a*₀ to sign the cross-blockchain transaction processing request to obtain the first signature. In the entire process, collecting all the first number of sub-signatures is not required

In operation S616, the first public key may published by adopting various methods. In a method, the first public key may be published on the website of the relay system. In this way, when needing to verify the first signature, the target blockchain network can acquire the first public key from the website of the relay system. In another method, the first public key may be broadcasted to all blockchain networks after the first public key is generated. In this way, the target blockchain network can acquire the first public key.

The embodiments of operation S613 to operation S616 have the advantages that generating the first number of private key fragments and respectively transmitting them to the first number of relays for generating the sub-signatures increase the quantity of verification nodes and improve the security is improved when compared with the method of directly generating the first signature based on the first private key through one node. Moreover, publishing the first public key can facilitate the target blockchain network to obtain the first public key and improve the verification efficiency.

### Detailed description of operation S620

In operation S620, first verification and signature are performed on the cross-blockchain transaction processing request through the relays to generate sub-signatures.

In an embodiment, operation S620 may specifically include the following operations: first verification is performed on the cross-blockchain transaction processing request through the relays, and signature is performed on the cross-blockchain transaction processing request by using private key fragments held by the relays to generate sub-signatures. The quantity of private key fragments is the first number. The first number of private key fragments are respectively held by the first number of relays. The first number of private key fragments correspond to a unique first public key.

As shown in FIG. 12, the first number of private key fragments are generated according to the first private key. The first number is M. Each private key fragment is a part of the first private key. The first private key uniquely corresponds to the first public key. Therefore, the M private key fragments generated according to the first private key all have a unique first public key.

As described above, the first interface node distributes the private key fragments to the first number of relays. Each relay receives a private key fragment. In each relay, first verification is performed on the cross-blockchain transaction processing request to confirm that the cross-blockchain transaction processing request is real, and then signature is performed on the cross-blockchain transaction processing request according to the held private key fragment to obtain a sub-signature. Each relay transmits its own sub-signature to the signature aggregation node.

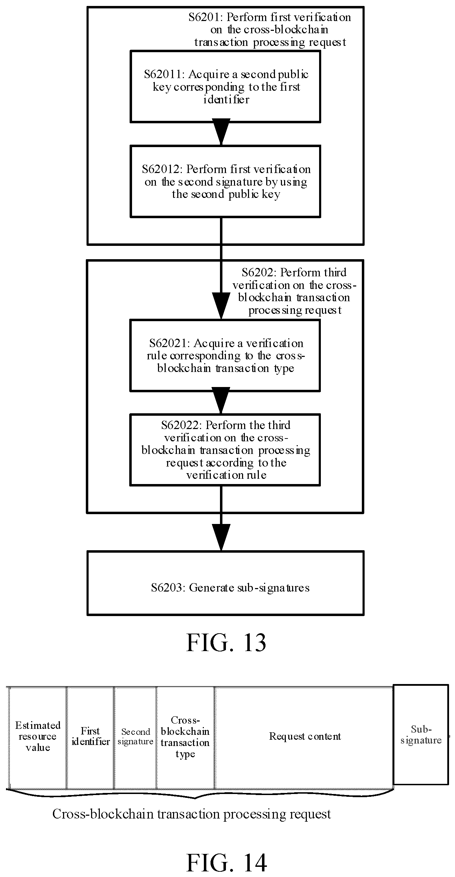

As shown in FIG. 13, in an embodiment, operation S620 includes the following operations: Operation S6201: First verification is performed on the cross-blockchain transaction processing request. Operation S6202: Third verification is performed on the cross-blockchain transaction processing request. Operation S6203: Sub-signatures are generated by using the private key fragments. Operation S6201 to operation S6203 are performed by the relays. The first verification is used for verifying that the cross-blockchain transaction processing request is really made by the first service node of the source blockchain network. The first verification can only verify that the cross-blockchain transaction processing request is made by the source blockchain network. However, if the source blockchain network cheats, there is nothing it can do. The third verification is used for further verifying that the cross-blockchain transaction really exists. If the cross-blockchain transaction does not really exist and is fabricated by cheating on the source blockchain network, it cannot pass the third verification. The third verification is exemplary.

The process of the first verification in operation S6201 will be firstly described below in detail.

In an embodiment, the cross-blockchain transaction processing request includes a first identifier of the first service node in the source blockchain network and a second signature of the first service node, as shown in FIG. 9. The function of the first identifier is to acquire the second public key of the first service node. The second signature is made by the first service node and represents that the cross-blockchain transaction processing request is really signed by the first service node. The second signature is generated by using the second private key of the first service node. In an embodiment, when the second signature is generated, a predetermined digest algorithm may be firstly used for generating a digest for the cross-blockchain transaction processing request, and then the digest is encrypted by using the second private key to obtain a second signature.

As shown in FIG. 13, the first verification in operation S6201 may specifically include the following operations:
Operation S62011: A second public key corresponding to the first identifier is acquired.
Operation S62012: First verification is performed on the second signature by using the second public key.

In operation S62011, the second public key corresponding to the first identifier may be acquired by adopting various methods. In a method, the first service node publishes its second public key in correspondence with the first identifier on the website of the source blockchain network. In this way, when the relays need to perform the first verification, the relays can acquire the second public key corresponding to the first identifier from the website of the source blockchain network according to the first identifier. In another method, the first service node broadcasts the second public key to each relay after the second public key is generated. In this way, the relays locally store the first identifier of the first service node in correspondence with the second public key. In operation S62011, the second public key corresponding to the first identifier can be acquired locally according to the first identifier.

In operation S62012, when the first verification is performed on the second signature by using the second public key, the second signature may be firstly decrypted by using the second public key to obtain the digest of the cross-blockchain transaction processing request. Then, the relays generate a digest of the cross-blockchain transaction processing request by performing the same digest algorithm on the cross-blockchain transaction processing request. If the generated digest is consistent with the decrypted digest, the first verification succeeds.

Operation S62011 to operation S62012 have the advantage that whether the second signature is really made by the first service node can be fully verified by acquiring the second public key of the first service node according to the first identifier and then performing first verification by using the second public key. If it is really made by the first service node, it is at least not a fake request made by a fake service node, thus improving the security of cross-blockchain transactions.

The process of the third verification in operation S6202 in FIG. 13 will be described below in detail.

As shown in FIG. 9, in an embodiment, the cross-blockchain transaction processing request further contains a cross-blockchain transaction type. The cross-blockchain transaction type is the type of the cross-blockchain transaction, such as cross-blockchain virtual resource exchange, cross-blockchain function calling, or multi-blockchain resource aggregation statistics.

As shown in FIG. 13, the third verification in operation S6202 may specifically include the following operations:
Operation S62021: A verification rule corresponding to the cross-blockchain transaction type is acquired.
Operation S62022: Third verification is performed on the cross-blockchain transaction processing request according to the verification rule.
Operation S62021 and operation S62022 are performed in the relays.

The third verification is used for further verifying that the cross-blockchain transaction really exists. The verification rule may vary depending on the cross-blockchain transaction type. For example, if the cross-blockchain transaction type is cross-blockchain virtual resource exchange, the verification rule may be that a verification request is transmitted to both terminals (the first terminal and the second terminal) involved in the virtual resource exchange, and the first terminal and the second terminal respond to confirm whether virtual resource exchange has been requested. The identifier of the first terminal and the identifier of the second terminal may be carried in the cross-blockchain transaction processing request. If the cross-blockchain transaction type is cross-blockchain function calling, the verification rule may be that a context request is transmitted to the first service node to request the first service node to transmit a context requiring cross-blockchain function calling, and the relays determine whether cross-blockchain function calling is required from the context. If the cross-blockchain transaction type is multi-blockchain resource aggregation statistics, the verification rule may be that a verification request is transmitted to the first terminal, and the first terminal responds to confirm whether multi-blockchain resource aggregation statistics has been requested. The identifier of the first terminal may be carried in the cross-blockchain transaction processing request.

The verification rules corresponding to various cross-blockchain transaction types may be pre-stored locally in the relays. In this way, in operation S62021, the relays may locally acquire the verification rule corresponding to the cross-blockchain transaction type. In operation S62022, the relays may perform third validation on the cross-blockchain transaction processing request according to the acquired verification rule.

Operation S62021 to operation S62022 have the advantage that the flexibility and effectiveness of verifying that the cross-blockchain transaction really exists are improved by configuring different verification rules for different cross-blockchain transaction types and performing the third verification according to the verification rule.

In operation S6203, when a relay generates the sub-signature, a digest may be generated by performing the predetermined digest algorithm on the cross-blockchain transaction processing request, and then the digest is encrypted by using the private key fragment of the relay to obtain the sub-signature. Then, the relay transmits the cross-blockchain transaction processing request and the sub-signature to the signature aggregation node, as shown in FIG. 14.

### Detailed description of operation S630

In operation S630, a first signature of the relay system is generated after receiving a second number of sub-signatures through the signature aggregation node, and the cross-blockchain transaction processing request and the first signature are transmitted to the target blockchain network, so that the target blockchain network performs second verification on the first signature and processes the cross-blockchain transaction processing request, the second number being an integer greater than 1 and smaller than the first number.

The process of generating the first signature of the relay system after receiving the second number of sub-signatures has been described in detail in conjunction with the function Y=*a*_{*n*-1}*x*^{*n-*1}+*a*_{*n-*2}*x*^{*n-*2}...*+a*₁ *x+a*₀, which will not be repeated here.

As described above, the second number needs to be at least greater than or equal to n in the above function Y=*a*_{*n*-1}*x*^{*n*-1}+*a*_{*n-*2}*x*^{*n*-2}...+*a*₁ *x+a*₀. On the basis of being greater than or equal to n, in an embodiment, the second number may be selected according to different cross-blockchain transaction types. For cross-blockchain transaction types with high security requirements, n is required be as large as possible. For cross-blockchain transaction types with low security requirements, n may be slightly small.

In this embodiment, the cross-blockchain transaction processing request further contains a cross-blockchain transaction type, as shown in FIG. 9. The second number may be determined by acquiring the cross-blockchain transaction type in the cross-blockchain transaction processing request; and looking up in a correspondence table between cross-blockchain transaction types and second numbers according to the cross-blockchain transaction type to determine the second number.

The cross-blockchain transaction type may be cross-blockchain virtual resource exchange, cross-blockchain function calling, or multi-blockchain resource aggregation statistics described above. The correspondence table between cross-blockchain transaction types and second numbers may be made in advance according to the security requirement of each cross-blockchain transaction type, for example:

**Table 1**

| Cross-blockchain transaction type | Second number |
|---|---|
| Cross-blockchain virtual resource exchange | 10 |
| Cross-blockchain function calling | 8 |
| Multi-blockchain resource aggregation statistics | 7 |

As shown in Table 1, for cross-blockchain virtual resource exchange, since exchange between different types of virtual resources of different objects is involved and the security requirements are high, a larger second number of 10 may be set. For cross-blockchain function calling, since asset changes are not involved and the security requirements are relatively lower, a slightly smaller second number of 8 may be set. For multi-blockchain resource aggregation statistics, since there is no change in assets, only statistics are performed, the assets of the same object are statistically collected, the asset leaks of other objects are not involved, and the security requirements are much lower, a much smaller second number of 7 may be set.

After the above correspondence table is made, the second number may be determined by looking up in the above correspondence table according to the cross-blockchain transaction type.

In this embodiment, for cross-blockchain transaction types with high security requirements, a relatively large second number may be set, thus improving the security of cross-blockchain transactions. For cross-blockchain transaction types with low security requirements, a smaller second number may be set, thus improving the execution efficiency, and achieving the balance and compromise between the security and the execution efficiency.

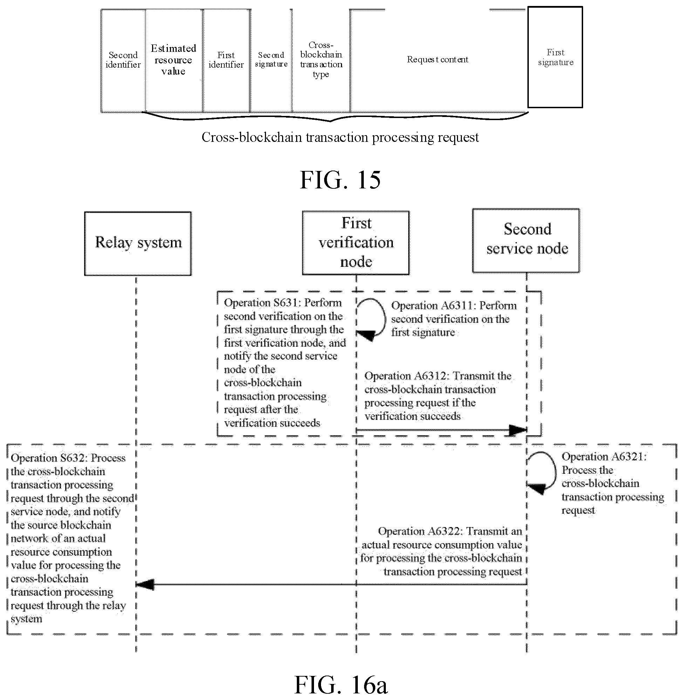

After the first signature is generated, the signature aggregation node transmits the cross-blockchain transaction processing request and the first signature to the target blockchain network, as shown in FIG. 15.

In an embodiment, the process that the target blockchain network performs second verification on the first signature in operation S630 may specifically include the following operation: the target blockchain network performs second verification on the first signature by using the first public key. The method of acquiring the first public key corresponds to the method of publishing the first public key described above. If the first public key is published on the website of the relay system, the first public key may be acquired from the website of the relay system. If the first interface node broadcasts the first public key to all blockchain networks after generating the first public key, the target blockchain network may receive the broadcasted first public key and store it corresponding to the identifier of the relay system. After the first signature of the relay system is received, the first public key is acquired locally according to the identifier of the relay system.

When the target blockchain network performs second verification on the first signature by using the first public key, the first signature may be decrypted by using the first public key to obtain the digest of the cross-blockchain transaction processing request. Then, a digest is generated by performing the same predetermined digest algorithm on the cross-blockchain transaction processing request. The generated digest is compared with the decrypted digest. If they are consistent, the second verification succeeds.

The second verification only verifies whether the cross-blockchain transaction processing request is a cross-blockchain transaction processing request officially signed by the relay system. If the verification succeeds, since the relay system is trustworthy and the relay system has performed the first verification and the third verifications, then the cross-blockchain transaction is secure.

To further explain the specific processing in the target blockchain network, the structure of the target blockchain network needs to be introduced first. As shown in FIG. 7, in an embodiment, the target blockchain network includes a first verification node, a second service node, and a second terminal.

The first verification node is a node that verifies the first signature of the relay system to prove that the cross-blockchain transaction processing request forwarded by the relay system has been indeed verified by the trustworthy relay system. It may be manifested in various forms such as desktop computers, laptops, mobile phones, Personal Digital Assistants (PDAs), vehicle-mounted terminals, dedicated terminals, and servers.

The second service node is a node in the target blockchain network that records the block onto the target blockchain, and it is also a node in the target blockchain network that processes the transaction to be collaboratively processed in the cross-blockchain transaction processing request. It may also be manifested in various forms such as desktop computers, laptops, mobile phones, Personal Digital Assistants (PDAs), vehicle-mounted terminals, dedicated terminals, and servers.

The second terminal is a terminal in the target blockchain network that is involved in processing the cross-blockchain transaction. For example, in the cross-blockchain virtual resource exchange scenario described above, if Object A wants to exchange with Object B in the target blockchain network through the source blockchain network for second virtual resources, then the terminal of Object B is the second terminal. The second terminal may be manifested in various forms such as desktop computers, laptops, mobile phones, Personal Digital Assistants (PDAs), vehicle-mounted terminals, dedicated terminals, and servers.

As shown in FIG. 16a, the process that the target blockchain network performs the second verification on the first signature and processes the cross-blockchain transaction processing request in operation S630 may specifically include the following operations:
Operation S631: Second verification is performed on the first signature through the first verification node (operation A6311 in FIG. 16a), and the first verification node transmits the cross-blockchain transaction processing request to the second service node after the verification succeeds (operation A6312).
Operation S632: The cross-blockchain transaction processing request is processed through the second service node (operation A6321 in FIG. 16a), and the source blockchain network is notified of an actual resource consumption value for processing the cross-blockchain transaction processing request through the relay system (operation A6322).

The process of performing the second verification on the first signature in operation S631 has been described above, so it will not be repeated here. The process of processing the cross-blockchain transaction processing request in operation S632 may vary depending on the content of the cross-blockchain transaction. The process of processing the cross-blockchain transaction processing request in the cross-blockchain virtual resource exchange scenario, the cross-blockchain function calling scenario, and the multi-blockchain resource aggregation statistics scenario will be described below by giving examples.

The actual resource consumption value refers to the value of resources consumed by the source blockchain network, the relay system, and the target blockchain network in the actual process of processing the cross-blockchain transaction processing request (actual consumed resource value). The actual consumed resource value of the source blockchain network is added to the cross-blockchain transaction processing request by the source blockchain network in the process of processing the cross-blockchain transaction processing request. The actual consumed resource value of the relay system is added to the cross-blockchain transaction processing request by the relay system in the process of processing the cross-blockchain transaction processing request. The processing of the cross-blockchain transaction processing request by the target blockchain network will also produce the actual consumed resource value of the target blockchain network. The second service node adds up the actual consumed resource value of the target blockchain network, the actual consumed resource value of the source blockchain network in the cross-blockchain transaction processing request, and the actual consumed resource value of the relay system to obtain the actual resource consumption value for processing the cross-blockchain transaction processing request. The second service node compares the actual resource consumption value with the estimated resource value in the cross-blockchain transaction processing request in FIG. 9. The estimated resource value is locked from the resource account of the first object on the source blockchain to ensure the execution of the cross-blockchain transaction on the source blockchain. Once the actual resource consumption value is greater than the locked estimated resource value, the cross-blockchain transaction processing request will be discarded and cannot be executed. However, if the estimated resource value is greater than the actual resource consumption value, as described below, the remaining part may be returned to the resource account of the first object on the source blockchain. Therefore, ensuring that the estimated resource value is greater than the actual resource consumption value is of great significance. This embodiment of this application effectively ensures this through the oracle machine in the source blockchain network.

The embodiments of operation S631 to operation S632 have the advantages that the first signature is effectively verified through the labor division and cooperation of the first verification node and the second service node, the cross-blockchain transaction processing request is processed, the actual resource consumption value is notified, and the processing efficiency of the target blockchain network in processing the cross-blockchain transaction processing request is improved.

In some embodiments, the second service node has a second cross-blockchain contract and a second service contract.

The second service contract refers to a contract established in advance between each object in the target blockchain network and the target blockchain network for executing various services for the object. The second cross-blockchain contract refers to a contract for processing the cross-blockchain transaction in the target blockchain network, which specifies rules that the target blockchain network and other blockchain networks need to follow when performing a cross-blockchain transaction.

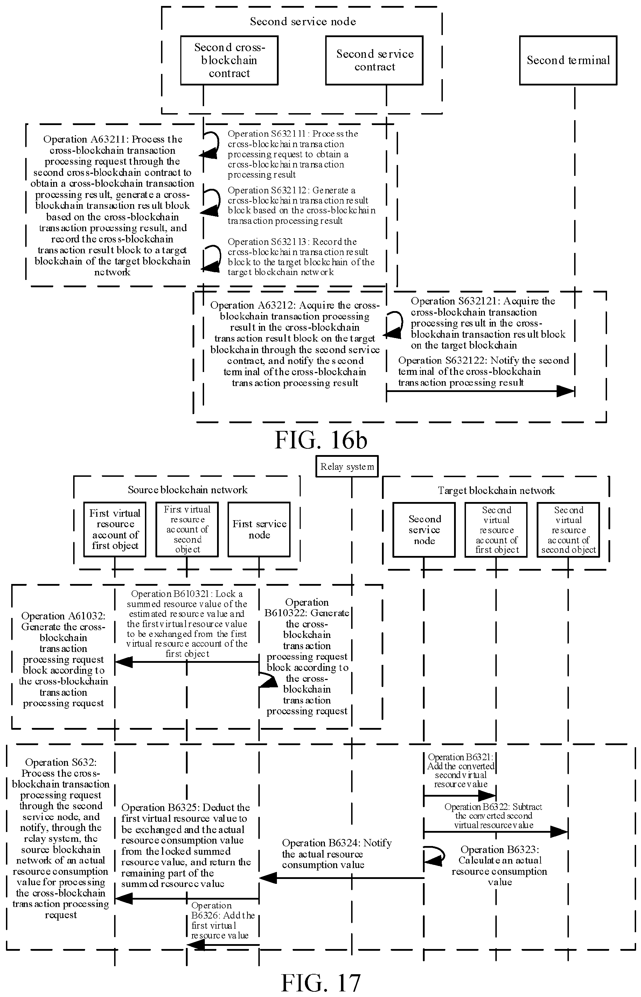

As shown in FIG. 16b, in an embodiment, operation A6321 specifically includes the following operations:
Operation A63211: The cross-blockchain transaction processing request is processed through the second cross-blockchain contract to obtain a cross-blockchain transaction processing result (operation S632111 in FIG. 16b), a cross-blockchain transaction result block is generated based on the cross-blockchain transaction processing result (operation S632112) , and the cross-blockchain transaction result block is recorded to a target blockchain of the target blockchain network (operation S632113), the cross-blockchain transaction processing result including a second terminal associated with the cross-blockchain transaction processing result.
Operation A63212: The cross-blockchain transaction processing result in the cross-blockchain transaction result block on the target blockchain is acquired through the second service contract (operation S632121), and the second terminal is notified of the cross-blockchain transaction processing result (operation S632122).

In operation S632111, different cross-blockchain transaction processing results may be obtained depending on different cross-blockchain transaction processing requests. Detailed description will be made below in conjunction with the cross-blockchain virtual resource exchange scenario, the cross-blockchain function calling scenario, and the multi-blockchain resource aggregation statistics scenario. For the scenario shown in FIG. 2a where Object A exchanges 20 first virtual resources for second virtual resources of Object B, as a result of executing the cross-blockchain transaction processing request, addition to or subtraction from the second virtual resource accounts of Object A and Object B on the target blockchain network will be executed. Since 20 first virtual resources are equivalent to two second virtual resources, when the cross-blockchain transaction processing request is executed, two second virtual resources will be subtracted from the second virtual resource account of Object B and two second virtual resources will be added to the second virtual resource account of Object A.

In operation S632112, the second cross-blockchain contract generates a cross-blockchain transaction result block by taking the cross-blockchain transaction processing result as part of the block body. The cross-blockchain transaction result block represents the block of the cross-blockchain transaction processing result. In the example in FIG. 2a, the second cross-blockchain contract will record the content of subtracting two second virtual resources from the second virtual resource account of Object B and adding two second virtual resources to the second virtual resource account of Object A into the cross-blockchain transaction result block. The second cross-blockchain contract may also record the second terminal into the cross-blockchain transaction result block. In addition, to indicate that the cross-blockchain transaction result block is a cross-blockchain transaction result block, a specific tag corresponding to the cross-blockchain transaction result block may also be recorded into the cross-blockchain transaction result block.

Then, in operation S632113, the second cross-blockchain contract records the cross-blockchain transaction result block to the target blockchain of the target blockchain network. In operation S632121, the second service contract discovers a new block recorded to the target blockchain. Once it is determined that the new block is a cross-blockchain transaction result block (such as through the specific tag corresponding to the cross-blockchain transaction result block), the cross-blockchain transaction processing result is extracted from the cross-blockchain transaction result block. Once the cross-blockchain transaction processing result involves the second terminal (for example, in the above example, the second cross-blockchain contract subtracts two second virtual resources from the second virtual resource account of Object B), the second service contract will notify the second terminal of the cross-blockchain transaction processing result in operation S632122.

In the embodiments of operation A63211 to operation A63212 above, through the mutual cooperation of the second cross-blockchain contract and the second service contract, the processing of the cross-blockchain transaction processing request, the corresponding recording to the blockchain, and the notification to the related terminal in the target blockchain network side are enabled to be performed in order, thus improving the efficiency of processing the cross-blockchain transaction in the target blockchain network side.

### Execution process of cross-blockchain transaction in cross-blockchain virtual resource exchange scenario

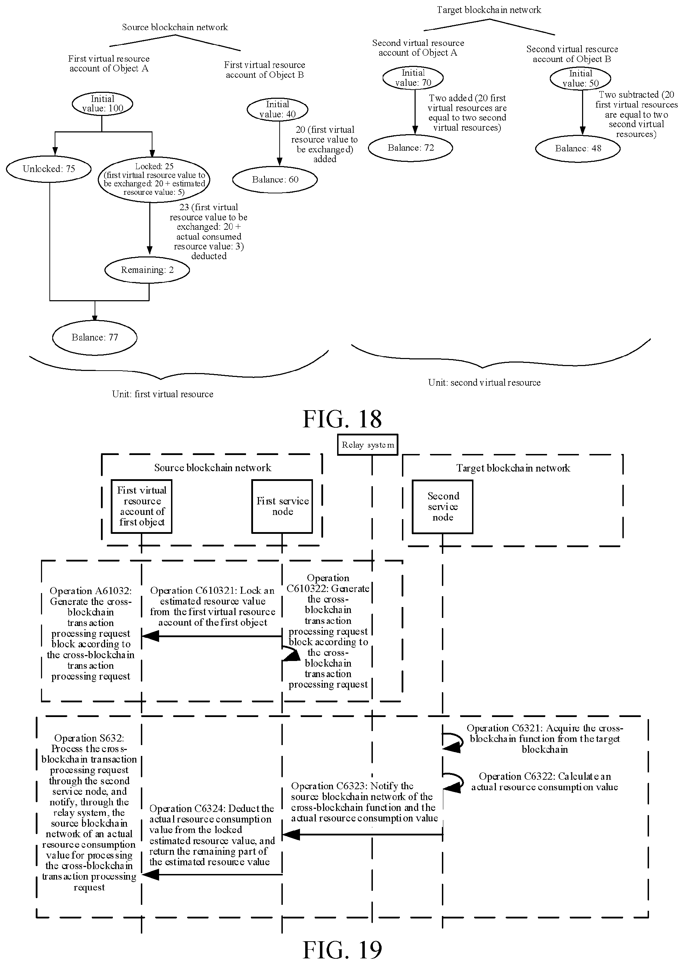

In this scenario, the cross-blockchain transaction processing request is a request to exchange the first virtual resources of the first object on the source blockchain network for the second virtual resources of the second object on the target blockchain network. Taking FIG. 18 as an example, it is a request to exchange the first virtual resources of Object A on the source blockchain network for the second virtual resources of Object B on the target blockchain network.

The source blockchain network has a first virtual resource account of the first object and a first virtual resource account of the second object, while the target blockchain network has a second virtual resource account of the first object and a second virtual resource account of the second object. Taking FIG. 18 as an example, the source blockchain network has a first virtual resource account of Object A, with an initial value of 100 first virtual resources; and a first virtual resource account of Object B, with an initial value of 40 first virtual resources. The target blockchain network has a second virtual resource account of Object A, with an initial value of 70 second virtual resources; and a second virtual resource account of Object B, with an initial value of 50 second virtual resources.

The cross-blockchain transaction processing request contains a first virtual resource value to be exchanged and a converted second virtual resource value written by the oracle machine corresponding to the first virtual resource value to be exchanged. Taking FIG. 18 as an example, the value of the first virtual resource value to be exchanged is 20 first virtual resources. An exchange rate between the first virtual resources and the second virtual resources is 10:1. The converted second virtual resource value is two second virtual resources.

In an embodiment, the first terminal transmits the cross-blockchain transaction processing request to the oracle machine. The cross-blockchain transaction processing request contains the first virtual resource value to be exchanged. The oracle machine has the latest exchange rates between various virtual resources. The oracle machine converts the first virtual resource value to be exchanged into a converted second virtual resource value according to the exchange rate between the first virtual resources and the second virtual resources, puts the converted second virtual resource value in the cross-blockchain transaction processing request and returns it back to the first terminal. The exchange rates between various virtual resources in the oracle machine may be periodically crawled from the exchange rates published on a virtual resource transaction website.

The advantage of estimating the converted second virtual resource value through the oracle machine in this embodiment is to reduce the uncertainty in the virtual resource exchange process. In the cross-blockchain virtual resource exchange scenario, it involves the conversion between virtual resource values. The perception of the converted value of different virtual resources in the existing cross-blockchain solutions is low, often resulting in uncertainty in the virtual resource exchange process. In this embodiment, by introducing the oracle machine, the oracle machine periodically crawls the exchange rates between virtual resources from the exchange rates published on the virtual resource trading website, thus reducing the uncertainty in the virtual resource exchange process and providing clear guidance for cross-blockchain virtual resource exchange.

As shown in FIG. 17, in the cross-blockchain virtual resource exchange scenario, operation A61032 described above may specifically include the following operations: a summed resource value of the estimated resource value and the first virtual resource value to be exchanged is locked from the first virtual resource account of the first object through the first service node (operation B610321); and a cross-blockchain transaction processing request block is generated according to the cross-blockchain transaction processing request through the first service node (operation B610322).

The meaning of locking is to freeze a part of resources in the resource account, and this part of resources are dedicated to a certain purpose and cannot be freely used until unlocked. For example, if 20 first virtual resources are locked from an account with 100 first virtual resources, only the remaining 80 first virtual resources of the account with 100 first virtual resources can be freely used. After the 20 first virtual resources are unlocked, the remaining part may be returned to the resource account for free use. Locking the summed resource value of the estimated resource value and the first virtual resource value to be exchanged from the first virtual resource account of the first object has the following significance: the first virtual resource value to be exchanged is the target of exchange required by the first object. If the resource value no longer exists in the first virtual resource account before the exchange process is completed, the exchange cannot be completed. Therefore, it needs to be locked and cannot be freely used until the exchange process is completed. In addition, the estimated resource value refers to a consumed resource value estimated to be produced in the source blockchain network, the relay system, and the target blockchain network for completing the cross-blockchain virtual resource exchange. If it is not locked, assuming that the resource value is used up before the exchange process is completed, the actual resource consumption value produced in the exchange cannot be met, resulting in exchange interruption. As shown in FIG. 18, the estimated resource value is five first virtual resources, and the first virtual resource value to be exchanged is 20 first virtual resources. Their summed resource value is 25 first virtual resources. 25 first virtual resources are locked from the first virtual resource account of Object A, and 75 first virtual resources are not locked.

As shown in FIG. 17, correspondingly, operation S632 may specifically include the following operations:
The converted second virtual resource value is added to the second virtual resource account of the first object through the second service node (operation B6321), the converted second virtual resource value is subtracted from the second virtual resource account of the second object (operation B6322), the actual resource consumption value is calculated (operation B6323), and the source blockchain network is notified of the actual resource consumption value through the relay system (operation B6324), so that the source blockchain network deducts the first virtual resource value to be exchanged and the actual resource consumption value from the locked summed resource value, returns the remaining part of the summed resource value to the first virtual resource account of the first object (operation B6325), and adds the first virtual resource value to be exchanged to the first virtual resource account of the second object (operation B6326).

As shown in FIG. 18, since Object A needs to exchange 20 first virtual resources for the second virtual resources of Object and 20 first virtual resources are equivalent to two second virtual resources, in operation B6321, it is required to add two second virtual resources to the second virtual resource account of Object A. The balance of the second virtual resource account of Object A after addition is 72 second virtual resources. Correspondingly, in operation B6322, it is required to subtract two second virtual resources from the second virtual resource account of Object B. The balance of the second virtual resource account of Object B after subtraction is 48 second virtual resources. Next, in operation B6323, the second service node calculates that the actual resource consumption value is 0.3 second virtual resources (three first virtual resources), and notifies the source blockchain network in operation B6324. In operation B6325, the source blockchain network deducts the first virtual resource value to be exchanged (20 first virtual resources) and the actual resource consumption value (three first virtual resources) from the 25 first virtual resources locked from the first virtual resource account of Object A. The remaining two first virtual resources are returned to the first virtual resource account of Object A and added to the unlocked 75 first virtual resources to obtain the balance of the first virtual resource account of Object A, which is 77 first virtual resources. In operation B6326, 20 first virtual resources are added to the first virtual resource account of Object B. The balance of the first virtual resource account of Object B is 60 first virtual resources.

This embodiment has the advantage that, by locking the summed resource value of the estimated resource value and the first virtual resource value to be exchanged in advance from the first virtual resource account of the first object, deducting the first virtual resource value to be exchanged and the actual resource consumption value from the locked summed resource value after the target blockchain network returns the actual resource consumption value, and returning the remaining part to the first virtual resource account of the first object, not only can the normal execution of virtual resource exchange be ensured, but also the unconsumed part of the estimated resource value can be returned in time to the first virtual resource account of the first object, thus improving the resource security.

### Execution process of cross-blockchain transaction in cross-blockchain function calling scenario

In this scenario, the cross-blockchain transaction processing request is a cross-blockchain function calling request when the service of the first object is executed on the source blockchain network. For example, when signing the first object, a digest algorithm X on the target blockchain is used, resulting in a request to call the digest algorithm X on the target blockchain.

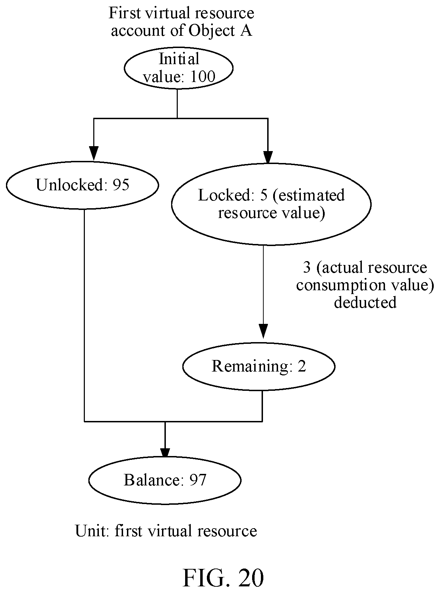

The source blockchain network has a first virtual resource account of the first object. Taking FIG. 20 as an example, the source blockchain network has a first virtual resource account of Object A, with an initial value of 100 first virtual resources.

In an embodiment, as shown in FIG. 19, operation A61032 specifically includes the following operations: an estimated resource value is locked from the first virtual resource account of the first object (operation C610321); and a cross-blockchain transaction processing request block is generated according to the cross-blockchain transaction processing request (operation C610322).

Locking the estimated resource value from the first virtual resource account of the first object has the following significance: if it is not locked, assuming that the resource value is used up before the cross-blockchain function calling process is completed, the actual resource consumption value produced in the cross-blockchain function calling cannot be met, resulting in cross-blockchain function calling interruption. As shown in FIG. 20, the estimated resource value is five first virtual resources. 5 first virtual resources are locked from the first virtual resource account of Object A, and 95 first virtual resources are not locked.

Correspondingly, operation S632 may specifically include the following operations: a cross-blockchain function is acquired from the target blockchain through the second service node (operation C6321), the actual resource consumption value is calculated (operation C6322), and the source blockchain network is notified of the cross-blockchain function and the actual resource consumption value through the relay system (operation C6323), so that the first service node of the source blockchain network deducts the actual resource consumption value from the locked estimated resource value and returns the remaining part of the estimated resource value to the first virtual resource account of the first object (operation C6324).

As shown in FIG. 20, the second service node calculates that the actual resource consumption value is 0.3 second virtual resources (three first virtual resources) and notifies the first service node. The first service node deducts the actual resource consumption value, i.e., three first virtual resources, from the five first virtual resources locked from the first virtual resource account of Object A. The remaining two first virtual resources are returned to the first virtual resource account of Object A and added to the unlocked 95 first virtual resources to obtain the balance of the first virtual resource account of Object A, which is 97 first virtual resources.

This embodiment has the advantage that, by locking the estimated resource value in advance from the first virtual resource account of the first object, deducting the actual resource consumption value from the locked estimated resource value after the target blockchain network returns the actual resource consumption value, and returning the remaining part to the first virtual resource account of the first object, not only can the normal execution of cross-blockchain function calling be ensured, but also the unconsumed part of the estimated resource value can be returned in time to the first virtual resource account of the first object, thus improving the resource security.

### Execution process of cross-blockchain transaction in multi-blockchain resource aggregation statistics scenario

In this scenario, the cross-blockchain transaction processing request is a request from the first object on the source blockchain network to statistically collect resources on the source blockchain network and the target blockchain network, such as a request from Object A to statistically collect a sum of resources of the first virtual resource account on the source blockchain network and resources of the second virtual resource account on the target blockchain network.

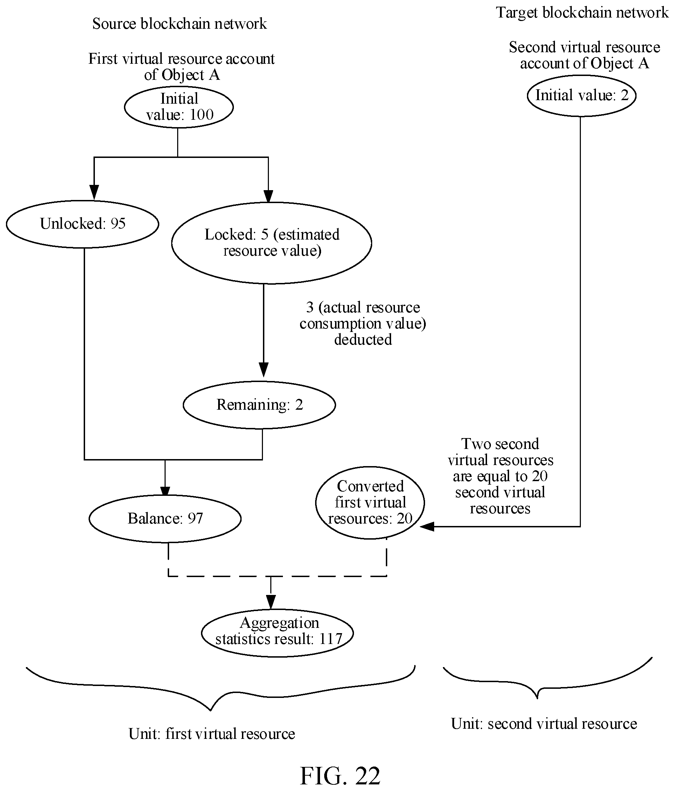

The source blockchain network has a first virtual resource account of the first object, and the target blockchain network has a second virtual resource account of the first object. Taking FIG. 22 as an example, the source blockchain network has a first virtual resource account of Object A, with an initial value of 100 first virtual resources. The target blockchain network has a second virtual resource account of Object A, with an initial value of two second virtual resources.

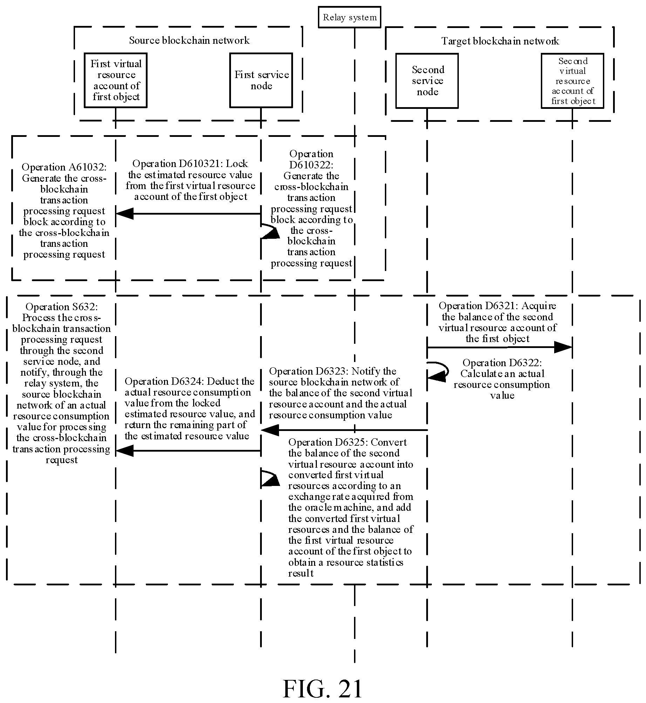

As shown in FIG. 21, in an embodiment, operation S61032 may specifically include the following operations: an estimated resource value is locked from the first virtual resource account of the first object through the first service node (operation D610321), and a cross-blockchain transaction processing request block is generated according to the cross-blockchain transaction processing request (operation D610322).

As shown in FIG. 22, the estimated resource value is five first virtual resources. 5 first virtual resources are locked from the first virtual resource account of Object A, and 95 first virtual resources are not locked.

Correspondingly, as shown in FIG. 21, operation S632 may specifically include the following operations: a balance of the second virtual resource account of the first object is acquired through the second service node (operation D6321), the actual resource consumption value is calculated (operation D6322), and the source blockchain network is notified of the balance of the second virtual resource account and the actual resource consumption value through the relay system (operation D6323), so that the source blockchain network deducts the actual resource consumption value from the locked estimated resource value, returns the remaining part of the estimated resource value to the first virtual resource account of the first object (operation D6324), converts the balance of the second virtual resource account into converted first virtual resources according to an exchange rate between the first virtual resources and the second virtual resources acquired from the oracle machine, and adds the converted first virtual resources and the balance of the first virtual resource account of the first object to obtain a resource statistics result (operation D6325).

As shown in FIG. 22, in operation D6321, the second service node acquires that the balance of the second virtual resource account of Object A is two second virtual resources. In operation D6322, the actual resource consumption value is calculated to be 0.3 second virtual resources (three first virtual resources). In operation D6323, the source blockchain network is notified of the balance, i.e., two second virtual resources, of the second virtual resource account of Object A, and the actual resource consumption value, i.e., three first virtual resources. In operation D6324, the source blockchain network deducts the actual resource consumption value, i.e., three first virtual resources, from the five first virtual resources locked from the first virtual resource account of Object A. The remaining two first virtual resources are returned to the first virtual resource account of Object A and added to the unlocked 95 first virtual resources to obtain the balance of the first virtual resource account of Object A, which is 97 first virtual resources. At the same time, the exchange rate between the first virtual resources and the second virtual resources is acquired from the oracle machine, which is 10: 1. The balance, i.e., two second virtual resources, of the second virtual resource account of Object A is converted into 20 first virtual resources, which are added to the balance, i.e., 97 first virtual resources, of the first virtual resource account of Object A to obtain an aggregation statistical result, i.e., 117 first virtual resources.

This embodiment has the advantage that, by locking the estimated resource value in advance from the first virtual resource account of the first object, deducting the actual resource consumption value from the locked estimated resource value after the target blockchain network returns the actual resource consumption value, and returning the remaining part to the first virtual resource account of the first object, not only can the normal execution of multi-blockchain resource aggregation statistics be ensured, but also the unconsumed part of the estimated resource value can be returned in time to the first virtual resource account of the first object, thus improving the resource security.

### Description of apparatuses and devices in embodiments of this application

Although the operations in the flowcharts are displayed sequentially according to the instructions of the arrows, these operations are not necessarily performed sequentially according to the sequence instructed by the arrows. Unless otherwise explicitly specified in this application, execution of these operations is not strictly limited by the sequence, and these operations may be performed in other sequences. Moreover, at least part of the operations in the above flowcharts may include multiple operations or multiple stages. These operations or stages are not necessarily executed at the same time, but may be executed at different times. The order of execution of these operations or stages is not necessarily performed sequentially, but may be performed in turn or alternately with other operations or at least a part of operations or stages of other operations.

When the embodiments of this application are applied to specific products or technologies, if the processing of relevant data such as user information is involved, user's permission or consent needs to be obtained, and the collection, use, and processing of the relevant data need to comply with relevant laws, regulations, and standards of relevant countries and regions.

An embodiment of this application further provides a relay system, and the relay system is applied between a source blockchain network and a target blockchain network. The relay system includes a first interface node, a first number of relays, and a signature aggregation node. The first number is an integer greater than 1.

The first interface node is configured to acquire a cross-blockchain transaction processing request from the source blockchain network, and distribute the cross-blockchain transaction processing request to the first number of relays.

The relays are configured to perform first verification and signature on the cross-blockchain transaction processing request to generate sub-signatures.

The signature aggregation node is configured to generate a first signature of the relay system after receiving a second number of sub-signatures, and transmit the cross-blockchain transaction processing request and the first signature to the target blockchain network, so that the target blockchain network performs second verification on the first signature and processes the cross-blockchain transaction processing request. The second number is an integer greater than 1 and smaller than or equal to the first number.

In some embodiments, the relays are specifically configured to perform first verification on the cross-blockchain transaction processing request, and perform signature on the cross-blockchain transaction processing request by using private key fragments held to generate sub-signatures. The quantity of private key fragments is the first number. The first number of private key fragments are respectively held by the first number of relays. The first number of private key fragments correspond to a unique first public key.

The target blockchain network is specifically configured to perform second verification on the first signature by using the first public key.

In some embodiments, the first interface node is specifically configured to
generate a first private key;
generate a first number of private key fragments and a first public key based on the first private key;
transmit the cross-blockchain transaction processing request and the first number of private key fragments to the first number of relays; and
publish the first public key.

In some embodiments, the cross-blockchain transaction processing request includes a first identifier of a first service node in the source blockchain network and a second signature of the first service node, and the second signature is generated by using the second private key of the first service node.

The relays are further specifically configured to
acquire a second public key corresponding to the first identifier; and
perform first verification on the second signature by using the second public key.

In some embodiments, the cross-blockchain transaction processing request further includes a cross-blockchain transaction type.

The first number of relays are further specifically configured to perform third verification on the cross-blockchain transaction processing request after performing first verification on the cross-blockchain transaction processing request. The third verification includes:
acquire a verification rule corresponding to the cross-blockchain transaction type; and
perform third verification on the cross-blockchain transaction processing request according to the verification rule.

In some embodiments, the first interface node is further specifically configured to
check a source blockchain of the source blockchain network; and
extract the cross-blockchain transaction processing request from the cross-blockchain transaction processing request block if the cross-blockchain transaction processing request block is discovered on the source blockchain, the cross-blockchain transaction processing request block having a second identifier of the relay system and the cross-blockchain transaction processing request.

In some embodiments, the source blockchain network includes a first terminal, an oracle machine, a first service node, and a second interface node.

The first terminal is configured to receive the cross-blockchain transaction processing request.

The oracle machine is configured to estimate resources consumed for processing the cross-blockchain transaction processing request, and write an estimated resource value obtained to the cross-blockchain transaction processing request.

The first service node is configured to generate the cross-blockchain transaction processing request block according to the cross-blockchain transaction processing request, and record the cross-blockchain transaction processing request block onto the source blockchain through the second interface node.

In some embodiments, the first service node has a first service contract and a first cross-blockchain contract.

The first service node is specifically configured to
call the first cross-blockchain contract through the first service contract; and
generate the cross-blockchain transaction processing request block according to the cross-blockchain transaction processing request through the first cross-blockchain contract.

In some embodiments, the target blockchain network includes a first verification node and a second service node.

The first verification node is configured to perform second verification on the first signature, and notify the second service node of the cross-blockchain transaction processing request after the verification succeeds.

The second service node is configured to process the cross-blockchain transaction processing request, and notify the source blockchain network of an actual resource consumption value for processing the cross-blockchain transaction processing request through the relay system.

In some embodiments, the second service node has a second cross-blockchain contract and a second service contract.

The second cross-blockchain contract is configured to process the cross-blockchain transaction processing request to obtain a cross-blockchain transaction processing result, generate a cross-blockchain transaction result block based on the cross-blockchain transaction processing result, and record the cross-blockchain transaction result block to a target blockchain of the target blockchain network, the cross-blockchain transaction processing result including a second terminal associated with the cross-blockchain transaction processing result.

The second service contract is configured to acquire the cross-blockchain transaction processing result in the cross-blockchain transaction result block on the target blockchain, and notify the second terminal of the cross-blockchain transaction processing result.

In some embodiments, the cross-blockchain transaction processing request is a request to exchange first virtual resources of a first object on the source blockchain network for second virtual resources of a second object on the target blockchain network, the source blockchain network has a first virtual resource account of the first object and a first virtual resource account of the second object, the target blockchain network has a second virtual resource account of the first object and a second virtual resource account of the second object, and the cross-blockchain transaction processing request contains a first virtual resource value to be exchanged and a converted second virtual resource value written by the oracle machine corresponding to the first virtual resource value to be exchanged.

The first service node is further specifically configured to lock a summed resource value of the estimated resource value and the first virtual resource value to be exchanged from the first virtual resource account of the first object, and generate the cross-blockchain transaction processing request block according to the cross-blockchain transaction processing request.

The second service node is further specifically configured to add the converted second virtual resource value to the second virtual resource account of the first object, subtract the converted second virtual resource value from the second virtual resource account of the second object, calculate the actual resource consumption value, and notify the source blockchain network of the actual resource consumption value through the relay system, so that the source blockchain network deducts the first virtual resource value to be exchanged and the actual resource consumption value from the locked summed resource value, returns the remaining part of the summed resource value to the first virtual resource account of the first object, and adds the first virtual resource value to be exchanged to the first virtual resource account of the second object.

In some embodiments, the cross-blockchain transaction processing request is a cross-blockchain function calling request when a service of the first object is executed on the source blockchain network, and the source blockchain network has a first virtual resource account of the first object.

The first service node is further specifically configured to lock the estimated resource value from the first virtual resource account of the first object, and generate the cross-blockchain transaction processing request block according to the cross-blockchain transaction processing request.

The second service node is further specifically configured to acquire a cross-blockchain function requested by the cross-blockchain function calling request from the target blockchain, calculate the actual resource consumption value, and notify the source blockchain network of the cross-blockchain function and the actual resource consumption value through the relay system, so that the source blockchain network deducts the actual resource consumption value from the locked estimated resource value and returns the remaining part of the estimated resource value to the first virtual resource account of the first object.

In some embodiments, the cross-blockchain transaction processing request is a request from a first object on the source blockchain network to statistically collect resources on the source blockchain network and the target blockchain network, the source blockchain network has a first virtual resource account of the first object, and the target blockchain network has a second virtual resource account of the first object.

The first service node is further specifically configured to lock the estimated resource value from the first virtual resource account of the first object, and generate the cross-blockchain transaction processing request block according to the cross-blockchain transaction processing request.

The second service node is further specifically configured to acquire a balance of the second virtual resource account of the first object, calculate the actual resource consumption value, and notify the source blockchain network of the balance of the second virtual resource account and the actual resource consumption value through the relay system, so that the source blockchain network deducts the actual resource consumption value from the locked estimated resource value, returns the remaining part of the estimated resource value to the first virtual resource account of the first object, converts the balance of the second virtual resource account into converted first virtual resources according to an exchange rate between the first virtual resources and the second virtual resources acquired from the oracle machine, and adds the converted first virtual resources and the balance of the first virtual resource account of the first object to obtain a resource statistics result.

In some embodiments, the cross-blockchain transaction processing request further includes a cross-blockchain transaction type. The signature aggregation node is further specifically configured to
acquire the cross-blockchain transaction type in the cross-blockchain transaction processing request; and
look up in a correspondence table between cross-blockchain transaction types and second numbers according to the cross-blockchain transaction type to determine the second number.

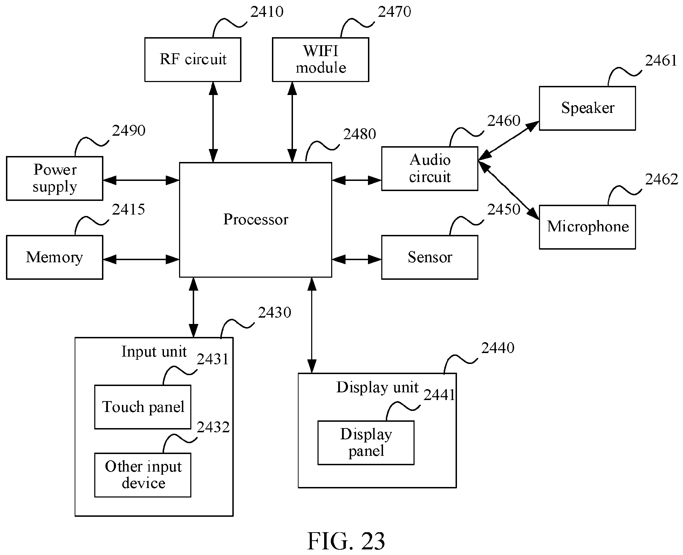

Reference is made to FIG. 23. FIG. 23 is a structural block diagram of a part of a terminal for implementing the method for processing cross-blockchain transactions according to this embodiment of this application. The terminal includes components such as a Radio Frequency (RF) circuit 2410, a memory 2415, an input unit 2430, a display unit 2440, a sensor 2450, an audio circuit 2460, a wireless fidelity (WiFi) module 2470, a processor 2480, and a power supply 2490. The structure of the terminal shown in FIG. 23 does not constitute any limitation on the terminal, which may include more or fewer components than those shown therein or a combination of some components, or a different component deployment may be adopted.

The RF circuit 2410 may be configured to receive and transmit a signal during information reception and transmission, and particularly, after receiving the downlink information from a base station, transmit it to the processor 2480 for processing. In addition, it transmits the related uplink data to the base station.

The memory 2415 may be configured to store a software program and a module, and the processor 2480 executes various function applications of the terminal and processes data by running the software program and the module stored in the memory 2415.

The input unit 2430 may be configured to receive inputted digit or character information, and generate a keyboard signal input related to settings and function control of the terminal. Specifically, the input unit 2430 may include a touch panel 2431 and another input apparatus 2432.

The display unit 2440 may be configured to display inputted information or provided information, and various menus of the terminal. The display unit 2440 may include a display panel 2441.

The audio circuit 2460, a speaker 2461, and a microphone 2462 may provide audio interfaces.

In this embodiment, the processor 2480 included in the terminal may execute the method for processing cross-blockchain transactions according to each embodiment described above.

In this embodiment of this application, the terminal includes, but is not limited to, a mobile phone, a computer, an intelligent voice interaction device, a smart home appliance, a vehicle-mounted terminal, an aircraft, and the like. This embodiment of this application may be applied to various scenarios, including, but not limited to, cloud technology, artificial intelligence, smart transportation, and assisted driving.

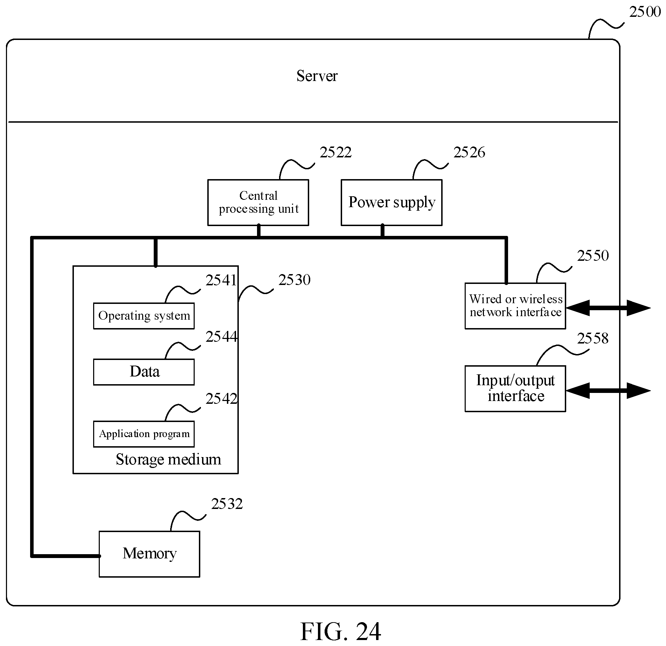

FIG. 24 is a structural block diagram of a part of a server 2500 for implementing the method for processing cross-blockchain transactions according to each embodiment of this application. The server 2500 may vary greatly because of different configurations or performance, and may include one or more Central Processing Units (CPUs) 2522 (for example, one or more processors), a memory 2532, and one or more storage media 2530 (for example, one or more mass storage devices) that store an application 2542 or data 2544. The memory 2532 and the storage medium 2530 may be used for temporary storage or permanent storage. A program stored in the storage medium 2530 may include one or more modules (not shown), and each module may include a series of instruction operations on the server 2500. Further, the CPU 2522 may be configured to communicate with the storage medium 2530, and perform, on the server 2500, the series of instruction operations on the storage medium 2530.

The server 2500 may further include one or more power supplies 2526, one or more wired or wireless network interfaces 2550, one or more input/output interfaces 2558, and/or one or more operating systems 2541, for example, Windows Server^{™}, Mac OS XT^{™}, Unix^{™}, Linux^{™}, or FreeB SD^{™}.

The CPU 2522 in the server 2500 may be configured to execute the method for processing cross-blockchain transactions according to this embodiment of this application.

An embodiment of this application further provides a computer-readable storage medium, having a program code stored, the program code being used for executing the method for processing cross-blockchain transactions according to each embodiment described above.

An embodiment of this application further provides a computer program product, the computer program product including a computer program. A processor of a computer device reads and executes the computer program, causing the computer device to implement the method for processing cross-blockchain transactions.

The above is a specific description of the embodiments of this application, but this application is not limited to the above embodiments. Those skilled in the art may make various equivalent modifications or replacements without going beyond the scope of this application. These equivalent modifications or replacements are all included within the scope as defined by the claims of this application.

## Claims

1. A method for processing cross-blockchain transactions, applied to a relay system between a source blockchain network and a target blockchain network, the relay system comprising a first interface node, a first number of relays, and a signature aggregation node, the first number being an integer greater than 1, the method for processing cross-blockchain transactions comprising:
acquiring a cross-blockchain transaction processing request from the source blockchain network through the first interface node, and distributing the cross-blockchain transaction processing request to the first number of relays;
performing first verification and signature on the cross-blockchain transaction processing request through the relays to generate sub-signatures; and
generating a first signature of the relay system after receiving a second number of sub-signatures through the signature aggregation node, and transmitting the cross-blockchain transaction processing request and the first signature to the target blockchain network, to enable the target blockchain network to perform second verification on the first signature and process the cross-blockchain transaction processing request, the second number being an integer greater than 1 and smaller than or equal to the first number.

2. The method for processing cross-blockchain transactions according to claim 1, wherein the performing first verification and signature on the cross-blockchain transaction processing request through the relays to generate sub-signatures comprises:
performing first verification on the cross-blockchain transaction processing request through the relays, and performing signature on the cross-blockchain transaction processing request by using private key fragments held by the relays to generate sub-signatures, a quantity of the private key fragments being the first number, the first number of private key fragments being respectively held by the first number of relays, and the first number of private key fragments corresponding to a unique first public key; and/or
the operation that the target blockchain network performs second verification on the first signature comprises:
performing, by the target blockchain network, second verification on the first signature by using the first public key.

3. The method for processing cross-blockchain transactions according to claim 2, wherein the distributing the cross-blockchain transaction processing request to the first number of relays comprises:
generating a first private key;
generating the first number of private key fragments and the first public key based on the first private key;
transmitting the cross-blockchain transaction processing request and the first number of private key fragments to the first number of relays; and
publishing the first public key.

4. The method for processing cross-blockchain transactions according to claim 1, wherein the cross-blockchain transaction processing request comprises a first identifier of a first service node in the source blockchain network and a second signature of the first service node, and the second signature is generated by using a second private key of the first service node;
the performing first verification on the cross-blockchain transaction processing request comprises:
acquiring a second public key corresponding to the first identifier; and
performing first verification on the second signature by using the second public key.

5. The method for processing cross-blockchain transactions according to claim 4, wherein the cross-blockchain transaction processing request further comprises a cross-blockchain transaction type;
after the performing first verification on the cross-blockchain transaction processing request, the method for processing cross-blockchain transactions further comprises:
performing third verification on the cross-blockchain transaction processing request,
the third verification comprising:
acquiring a verification rule corresponding to the cross-blockchain transaction type; and
performing the third verification on the cross-blockchain transaction processing request according to the verification rule.

6. The method for processing cross-blockchain transactions according to claim 1, wherein the acquiring a cross-blockchain transaction processing request from the source blockchain network comprises:
checking a source blockchain of the source blockchain network; and
extracting the cross-blockchain transaction processing request from a cross-blockchain transaction processing request block when the cross-blockchain transaction processing request block is discovered on the source blockchain, the cross-blockchain transaction processing request block having a second identifier of the relay system and the cross-blockchain transaction processing request.

7. The method for processing cross-blockchain transactions according to claim 6, wherein the source blockchain network comprises a first terminal, an oracle machine, a first service node, and a second interface node, and the cross-blockchain transaction processing request block is recorded to the source blockchain by:
receiving the cross-blockchain transaction processing request through the first terminal;
estimating, through the oracle machine, resources consumed for processing the cross-blockchain transaction processing request, and writing an estimated resource value to the cross-blockchain transaction processing request; and
generating the cross-blockchain transaction processing request block according to the cross-blockchain transaction processing request through the first service node, and recording the cross-blockchain transaction processing request block onto the source blockchain through the second interface node.

8. The method for processing cross-blockchain transactions according to claim 7, wherein the first service node has a first service contract and a first cross-blockchain contract; and
the generating the cross-blockchain transaction processing request block according to the cross-blockchain transaction processing request comprises:
calling the first cross-blockchain contract through the first service contract; and
generating the cross-blockchain transaction processing request block according to the cross-blockchain transaction processing request through the first cross-blockchain contract.

9. The method for processing cross-blockchain transactions according to claim 7, wherein the target blockchain network comprises a first verification node and a second service node, and the operation that the target blockchain network performs second verification on the first signature and processes the cross-blockchain transaction processing request comprises:
performing second verification on the first signature through the first verification node, and notifying the second service node of the cross-blockchain transaction processing request after the verification succeeds; and
processing the cross-blockchain transaction processing request through the second service node, and notifying, through the relay system, the source blockchain network of an actual resource consumption value for processing the cross-blockchain transaction processing request.

10. The method for processing cross-blockchain transactions according to claim 9, wherein the second service node has a second cross-blockchain contract and a second service contract;
the processing the cross-blockchain transaction processing request through the second service node comprises:
processing the cross-blockchain transaction processing request through the second cross-blockchain contract to obtain a cross-blockchain transaction processing result, generating a cross-blockchain transaction result block based on the cross-blockchain transaction processing result, and recording the cross-blockchain transaction result block to a target blockchain of the target blockchain network, the cross-blockchain transaction processing result comprising a second terminal associated with the cross-blockchain transaction processing result; and
acquiring the cross-blockchain transaction processing result in the cross-blockchain transaction result block on the target blockchain through the second service contract, and notifying the second terminal of the cross-blockchain transaction processing result.

11. The method for processing cross-blockchain transactions according to claim 9, wherein the cross-blockchain transaction processing request is a request to exchange first virtual resources of a first object on the source blockchain network for second virtual resources of a second object on the target blockchain network, the source blockchain network has a first virtual resource account of the first object and a first virtual resource account of the second object, the target blockchain network has a second virtual resource account of the first object and a second virtual resource account of the second object, and the cross-blockchain transaction processing request contains a first virtual resource value to be exchanged and a converted second virtual resource value written by the oracle machine corresponding to the first virtual resource value to be exchanged; and/or
the generating the cross-blockchain transaction processing request block according to the cross-blockchain transaction processing request through the first service node comprises:
locking a summed resource value of the estimated resource value and the first virtual resource value to be exchanged from the first virtual resource account of the first object through the first service node, and generating the cross-blockchain transaction processing request block according to the cross-blockchain transaction processing request; and/or
the processing the cross-blockchain transaction processing request through the second service node, and notifying, through the relay system, the source blockchain network of an actual resource consumption value for processing the cross-blockchain transaction processing request comprises:
adding the converted second virtual resource value to the second virtual resource account of the first object through the second service node, subtracting the converted second virtual resource value from the second virtual resource account of the second object, calculating the actual resource consumption value, and notifying the source blockchain network of the actual resource consumption value via the relay system, such that the source blockchain network deducts the first virtual resource value to be exchanged and the actual resource consumption value from the locked summed resource value, returns the remaining part of the summed resource value to the first virtual resource account of the first object, and adds the first virtual resource value to be exchanged to the first virtual resource account of the second object.

12. The method for processing cross-blockchain transactions according to claim 9, wherein the cross-blockchain transaction processing request is a cross-blockchain function calling request when a service of the first object is executed on the source blockchain network, and the source blockchain network has a first virtual resource account of the first object;
the generating the cross-blockchain transaction processing request block according to the cross-blockchain transaction processing request through the first service node comprises:
locking an estimated resource value from the first virtual resource account of the first object through the first service node, and generating the cross-blockchain transaction processing request block according to the cross-blockchain transaction processing request; and/or
the processing the cross-blockchain transaction processing request through the second service node, and notifying, through the relay system, the source blockchain network of an actual resource consumption value for processing the cross-blockchain transaction processing request comprises:
acquiring a cross-blockchain function requested by the cross-blockchain function calling request from the target blockchain through the second service node, calculating the actual resource consumption value, and notifying the source blockchain network of the cross-blockchain function and the actual resource consumption value via the relay system, to enable the source blockchain network to deduct the actual resource consumption value from the locked estimated resource value and return the remaining part of the estimated resource value to the first virtual resource account of the first object.

13. The method for processing cross-blockchain transactions according to claim 9, wherein the cross-blockchain transaction processing request is a request from a first object on the source blockchain network to statistically collect resources on the source blockchain network and the target blockchain network, the source blockchain network has a first virtual resource account of the first object, and the target blockchain network has a second virtual resource account of the first object;
the generating the cross-blockchain transaction processing request block according to the cross-blockchain transaction processing request through the first service node comprises:
locking an estimated resource value from the first virtual resource account of the first object through the first service node, and generating the cross-blockchain transaction processing request block according to the cross-blockchain transaction processing request; and/or
the processing the cross-blockchain transaction processing request through the second service node, and notifying, through the relay system, the source blockchain network of an actual resource consumption value for processing the cross-blockchain transaction processing request comprises:
acquiring a balance of the second virtual resource account of the first object through the second service node, calculating the actual resource consumption value, and notifying the source blockchain network of the balance of the second virtual resource account and the actual resource consumption value via the relay system, such that the source blockchain network deducts the actual resource consumption value from the locked estimated resource value, returns the remaining part of the estimated resource value to the first virtual resource account of the first object, converts the balance of the second virtual resource account into converted first virtual resources according to an exchange rate between the first virtual resources and the second virtual resources acquired from the oracle machine, and adds the converted first virtual resources and the balance of the first virtual resource account of the first object to obtain a resource statistics result.

14. The method for processing cross-blockchain transactions according to claim 1, wherein the cross-blockchain transaction processing request further comprises a cross-blockchain transaction type, and the second number is determined by:
acquiring the cross-blockchain transaction type in the cross-blockchain transaction processing request; and
looking up the second number in a correspondence table between cross-blockchain transaction types and second numbers according to the cross-blockchain transaction type.

15. A relay system, applied between a source blockchain network and a target blockchain network, the relay system comprising a first interface node, a first number of relays, and a signature aggregation node, the first number being an integer greater than 1,
the first interface node being configured to acquire a cross-blockchain transaction processing request from the source blockchain network, and distribute the cross-blockchain transaction processing request to the first number of relays;
the relays being configured to perform first verification and signature on the cross-blockchain transaction processing request to generate sub-signatures; and
the signature aggregation node being configured to generate a first signature of the relay system after receiving a second number of sub-signatures, and transmit the cross-blockchain transaction processing request and the first signature to the target blockchain network, to enable the target blockchain network to perform second verification on the first signature and process the cross-blockchain transaction processing request, the second number being an integer greater than 1 and smaller than or equal to the first number.

16. An electronic device, comprising a memory and a processor, the memory having a computer program stored, the processor executing the computer program to implement the method for processing cross-blockchain transactions according to any one of claims 1 to 14.

17. A computer-readable storage medium, having a computer program stored, the computer program being executed by a processor to implement the method for processing cross-blockchain transactions according to any one of claims 1 to 14.

18. A computer program product, comprising a computer program, the computer program being read and executed by a processor of a computer device, causing the computer device to implement the method for processing cross-blockchain transactions according to any one of claims 1 to 14.
